# EUROPEAN PATENT SPECIFICATION

(11) **EP 4 190 878 B1**
(45) Date of publication and mention of the grant of the patent: **07.10.2026**
(21) Application number: 21852689.5
(22) Date of filing: 03.08.2021
(51) Int. Cl.: C09K 5/04

(54) **REFRIGERANT-CONTAINING COMPOSITION, USE THEREOF, REFRIGERATOR HAVING SAME, AND METHOD FOR OPERATING SAID REFRIGERATOR**
KÄLTEMITTELHALTIGE ZUSAMMENSETZUNG, VERWENDUNG DAVON, KÜHLSCHRANK DAMIT UND VERFAHREN ZUM BETRIEB DES KÜHLSCHRANKS
COMPOSITION CONTENANT UN FLUIDE FRIGORIGÈNE, SON UTILISATION, RÉFRIGÉRATEUR LA COMPRENANT, ET PROCÉDÉ DE FONCTIONNEMENT DUDIT RÉFRIGÉRATEUR

(30) Priority: 03.08.2020 JP 2020131982
(43) Date of publication of application: 07.06.2023
(73) Proprietor: Daikin Industries, Ltd., Osaka-shi, Osaka 530-0001 (JP)
(72) Inventor: ITANO, Mitsushi, Osaka-shi, Osaka 530-0001 (JP); OHKUBO, Shun, Osaka-shi, Osaka 530-0001 (JP); TOKUNO, Satoshi, Osaka-shi, Osaka 530-0001 (JP); GOBOU, Kenji, Osaka-shi, Osaka 530-0001 (JP)
(74) Representative: Hoffmann Eitle
(86) International application number: PCT/JP2021/028835
(87) International publication number: WO 2022/030511

(56) References cited:
- WO-A1-2019/240205
- WO-A1-2019/245045
- WO-A1-2020/071380

## Description

### Technical Field

The present disclosure relates to a composition comprising a refrigerant, use of the composition, a refrigerating machine having the composition, and a method for operating the refrigerating machine.

### Background Art

R410A is currently used as an air conditioning refrigerant for home air conditioners etc. R410A is a two-component mixed refrigerant of difluoromethane (CH₂F₂: HFC-32 or R32) and pentafluoroethane (C₂HF₅: HFC-125 or R125), and is a pseudo-azeotropic composition.

However, the global warming potential (GWP) of R410A is 2088. Due to growing concerns about global warming, R32, which has a GWP of 675, has been increasingly used.

For this reason, various low-GWP mixed refrigerants that can replace R410A have been proposed (WO 2015/141678).

EP-A-3 862 408 (WO 2020/071380) discloses a composition for a heat cycle system, which comprises a working fluid for heat cycle containing 1,1,2-trifluoroethylene, CF₃I and at least one compound selected from a hydrofluorocarbon, a hydrofluoroolefin other than 1,1,2-trifluoroethylene and a hydrocarbon, and having a temperature glide of at most 7°C.

### Summary of Invention

### Technical Problem

An object of the present disclosure is to provide a novel low-GWP mixed refrigerant.

### Solution to Problem

The present invention provides a composition comprising a refrigerant comprising trans-1,2-difluoroethylene (HFO-1132(E)), trifluoroiodomethane (CF₃I), 2,3,3,3-tetrafluoro-1-propene (R1234yf), and difluoromethane (R32) (also referred to as "the present composition" hereinafter).

Also, the present invention provides the use of the present composition as an alternative refrigerant for R410A.

Furthermore, the present invention provides the use of the present composition as a working fluid for a refrigerating machine.

Yet further, the present invention provides (i) a refrigerating machine comprising the present composition as a working fluid, and (ii) a method for operating a refrigerating machine, comprising circulating the present composition as a working fluid in a refrigerating machine.

Preferred embodiments of the invention are as defined in the appended dependent claims and/or in the following detailed description

### Advantageous Effects of Invention

The refrigerant of the present disclosure has a low GWP.

### Brief Description of Drawings

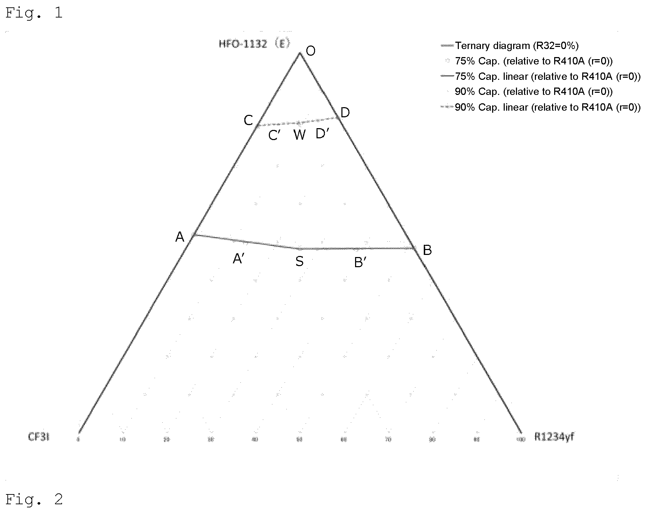

Fig. 1 is a ternary composition diagram having HFO-1132(E), CF₃I, and R1234yf as vertices, in which the sum of these components is 100 mass% (the R32 content is 0 mass%).
Fig. 2 is a ternary composition diagram having HFO-1132(E), CF₃I, and R1234yf as vertices, in which the sum of these components is 93 mass% (the R32 content is 7 mass%).

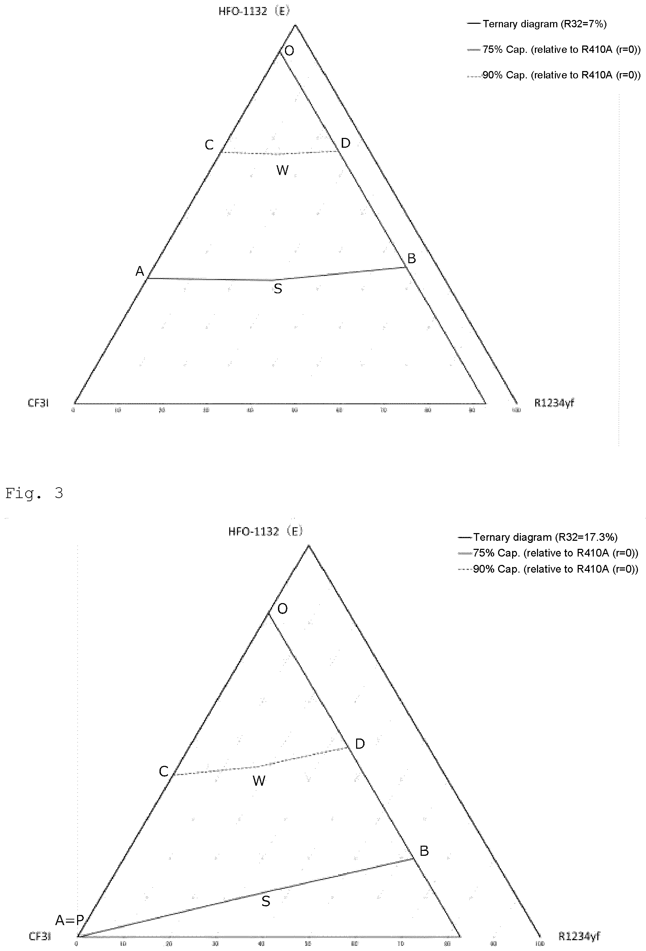

Fig. 3 is a ternary composition diagram having HFO-1132(E), CF₃I, and R1234yf as vertices, in which the sum of these components is 82.7 mass% (the R32 content is 17.3 mass%).

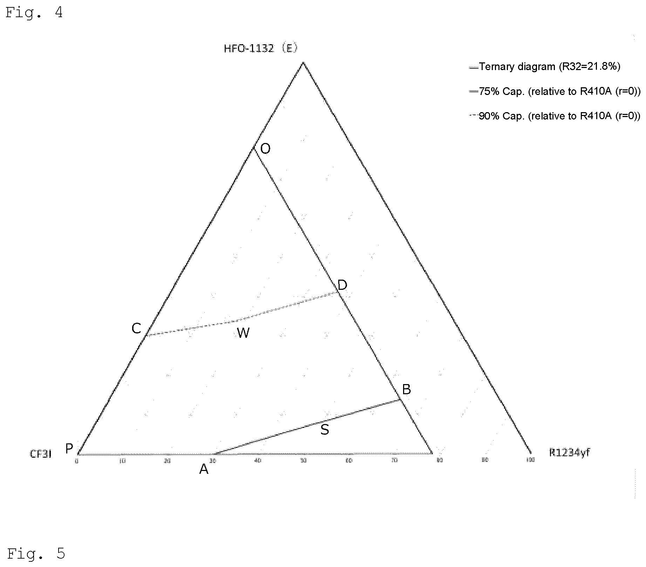

Fig. 4 is a ternary composition diagram having HFO-1132(E), CF₃I, and R1234yf as vertices, in which the sum of these components is 78.4 mass% (the R32 content is 21.8 mass%).
Fig. 5 is a ternary composition diagram having HFO-1132(E), CF₃I, and R1234yf as vertices, in which the sum of these components is 66.9 mass% (the R32 content is 33.1 mass%).

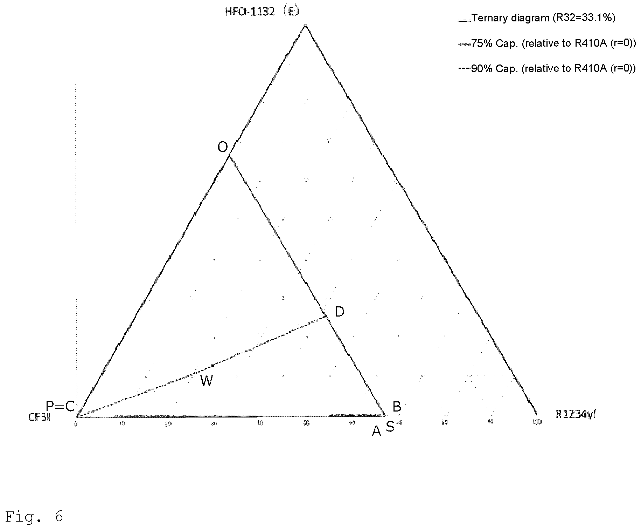

Fig. 6 is a ternary composition diagram having HFO-1132(E), CF₃I, and R1234yf as vertices, in which the sum of these components is 66.7 mass% (the R32 content is 33.3 mass%).

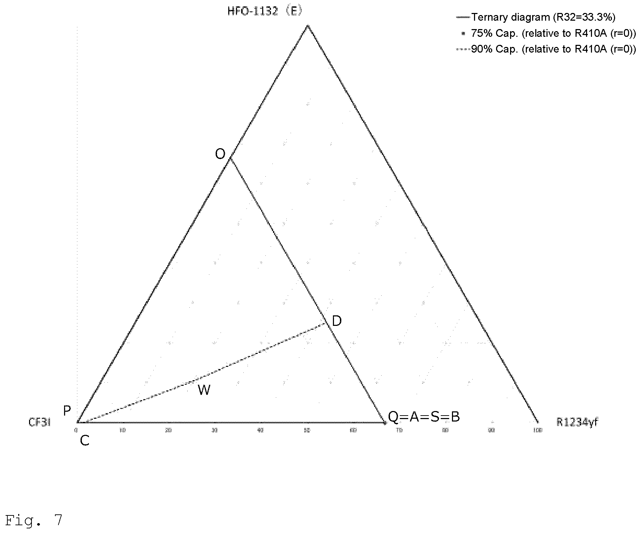

Fig. 7 is a ternary composition diagram having HFO-1132(E), CF₃I, and R1234yf as vertices, in which the sum of these components is 56 mass% (the R32 content is 44 mass%).

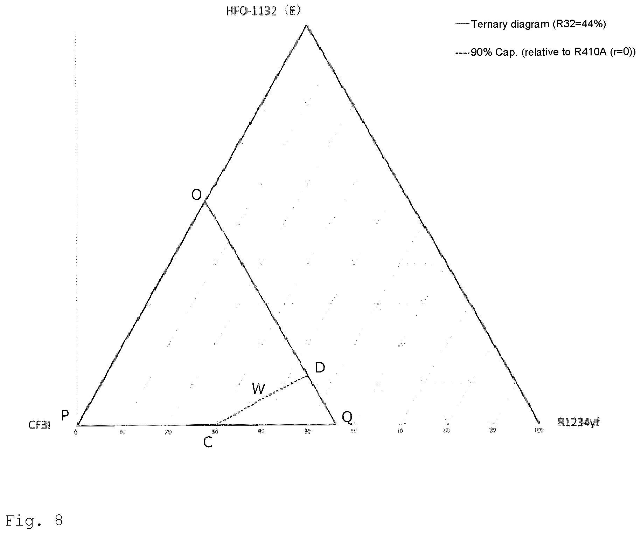

Fig. 8 is a ternary composition diagram having HFO-1132(E), CF₃I, and R1234yf as vertices, in which the sum of these components is 48.4 mass% (the R32 content is 51.6 mass%).

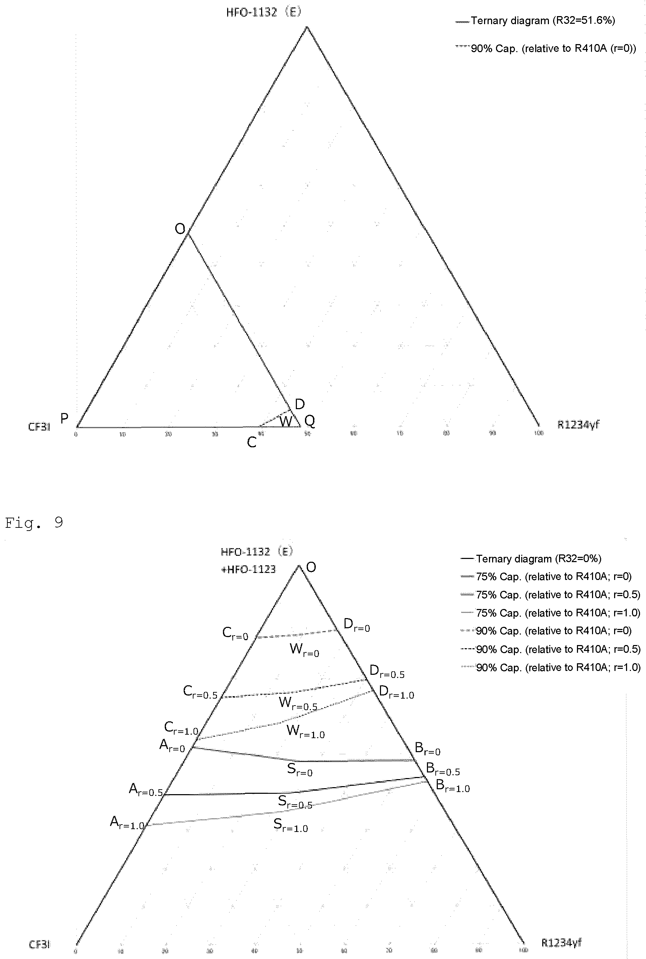

Fig. 9 is a ternary composition diagram having the sum of HFO-1132(E) and HFO-1123 as a first vertex, and CF₃I and R1234yf as second and third vertices, respectively, in which the sum of these components is 100 mass% (the R32 content is 0 mass%).

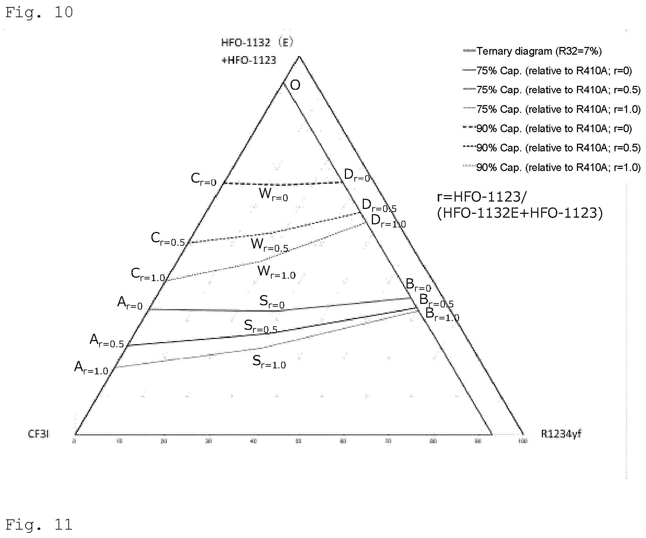

Fig. 10 is a ternary composition diagram having the sum of HFO-1132(E) and HFO-1123 as a first vertex, and CF₃I and R1234yf as second and third vertices, respectively, in which the sum of these components is 93 mass% (the R32 content is 7 mass%).
Fig. 11 is a ternary composition diagram having the sum of HFO-1132(E) and HFO-1123 as a first vertex, and CF₃I and R1234yf as second and third vertices, respectively, in which the sum of these components is 82.7 mass% (the R32 content is 17.3 mass%).

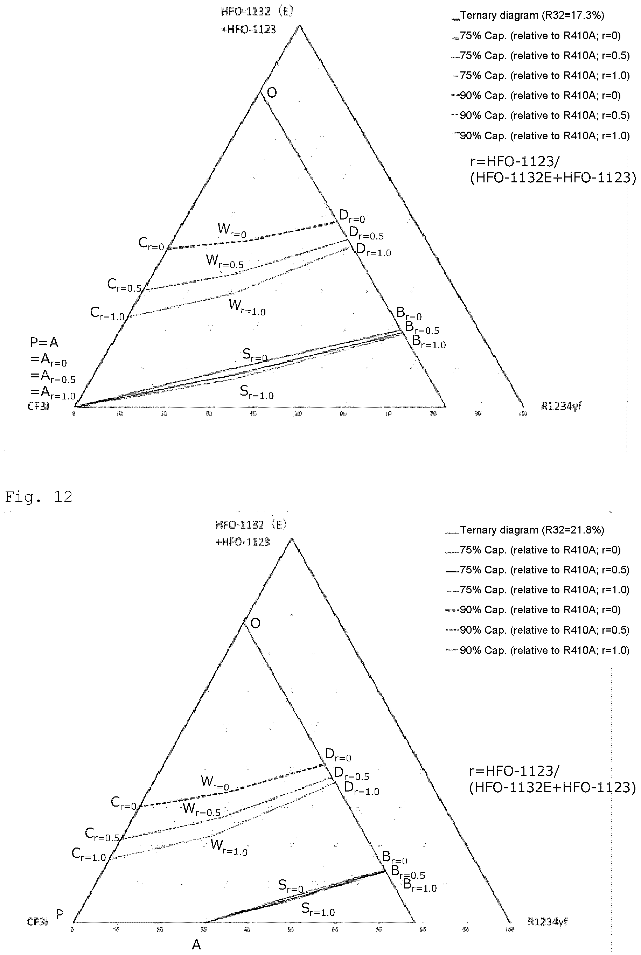

Fig. 12 is a ternary composition diagram having the sum of HFO-1132(E) and HFO-1123 as a first vertex, and CF₃I and R1234yf as second and third vertices, respectively, in which the sum of these components is 78.2 mass% (the R32 content is 21.8 mass%).

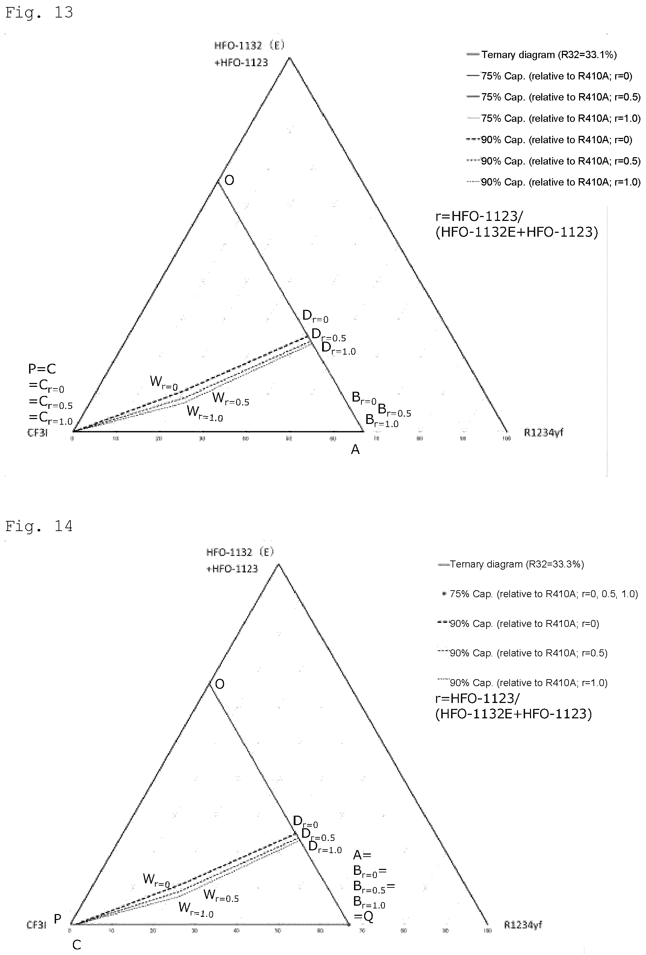

Fig. 13 is a ternary composition diagram having the sum of HFO-1132(E) and HFO-1123 as a first vertex, and CF₃I and R1234yf as second and third vertices, respectively, in which the sum of these components is 66.9 mass% (the R32 content is 33.1 mass%).
Fig. 14 is a ternary composition diagram having the sum of HFO-1132(E) and HFO-1123 as a first vertex, and CF₃I and R1234yf as second and third vertices, respectively, in which the sum of these components is 66.7 mass% (the R32 content is 33.3 mass%).

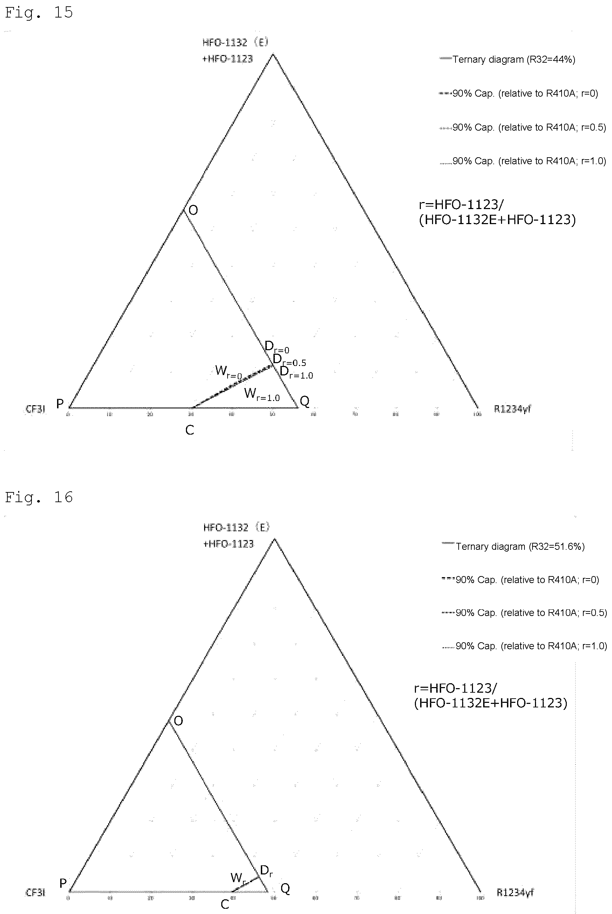

Fig. 15 is a ternary composition diagram having the sum of HFO-1132(E) and HFO-1123 as a first vertex, and CF₃I and R1234yf as second and third vertices, respectively, in which the sum of these components is 56 mass% (the R32 content is 44 mass%).
Fig. 16 is a ternary composition diagram having the sum of HFO-1132(E) and HFO-1123 as a first vertex, and CF₃I and R1234yf as second and third vertices, respectively, in which the sum of these components is 48.4 mass% (the R32 content is 51.6 mass%).

### Description of Embodiments

The present inventors conducted intensive studies to solve the above problem, and consequently found that a mixed refrigerant comprising HFO-1132(E), CF₃I, and R1234yf, as well as R32 has the above properties.

The present disclosure has been completed as a result of further research based on this finding. The present disclosure includes the following embodiments.

### Definition of Terms

The term "refrigerant" includes at least compounds that are specified in ISO 817 (International Organization for Standardization), and that are given a refrigerant number (ASHRAE number) representing the type of refrigerant with "R" at the beginning; and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC). Examples of non-fluorocarbon compounds include propane (R290), propylene (R1270), butane (R600), isobutane (R600a), carbon dioxide (R744), and ammonia (R717).

The phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration oil-containing working fluid" so as to distinguish it from the "refrigerant composition."

When the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

The term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

### 1. Refrigerant

### 1.1 Refrigerant Component

The refrigerant of the present disclosure (also "the present refrigerant" hereinafter) comprises HFO-1132(E), CF₃I, R1234yf, and R32.

The present refrigerant is a low-GWP mixed refrigerant.

The present refrigerant preferably satisfies the following requirements. In this case, the present refrigerant has a refrigerating capacity ratio of 75% or more relative to that of R410A.

### Requirements

When the mass% of HFO-1132(E), CF₃I, R1234yf, and R32 based on their sum is respectively represented by x, y, z, and a, provided that 0<a≤29.2,
if 0<a≤7.0, coordinates (x,y,z) in a ternary composition diagram in which the sum of HFO-1132(E), CF₃I, and R1234yf is (100-a) mass% are within the range of a figure surrounded by straight lines AS, SB, BO, and OA that connect the following 4 points:
   point A (-0.0167a²-2.6115a+52.1, 0.0167a²+1.6115a+47.9, 0.0),
   point S (0.0042a²-2.2866a+48.3, 0.0023a²+0.8408a+26.0, - 0.0065a²+0.4458a+25.7),
   point B (0.0088a²-1.8471a+48.5, 0.0, -0.0088a²+0.8471a+51.5), and point O (100.0-a, 0.0, 0.0),
   or on the straight lines AS and SB (excluding the points A and B);
if 7.0<a≤17.3, coordinates (x,y,z) in the ternary composition diagram are within the range of a figure surrounded by straight lines AS, SB, BO, and OA that connect the following 4 points:
   point A (-0.0423a²-2.1749a+50.299, 0.0423a²+1.1749a+49.701, 0.0),
   point S (0.007a²-2.3257a+48.437, -0.0029a²+0.9539a+25.465, - 0.0041a²+0.3718a+26.098),
   point B (0.0129a²-1.857a+48.367, 0.0, -0.0129a²+0.857a+51.633), and
   point O (100.0-a, 0.0, 0.0),
   or on the straight lines AS and SB (excluding the points A and B); or
if 17.3<a≤29.2, coordinates (x,y,z) in the ternary composition diagram are within the range of a figure surrounded by straight lines PA, AS, SB, BO, and OP that connect the following 5 points:
   point P (0.0, 100.0-a, 0.0),
   point A (0.0, 0.2556a²-17.615a+310.95, -0.2556a²+16.615a-210.95),
   point S (0.0034a²-0.8211a+23.493, 0.1285a²-8.8263a+155.32, - 0.1319a²+8.6474a-78.813),
   point B (0.0113a²-1.8198a+48.199, 0.0, -0.0113a²+0.8198a+51.801), and
   point O (100.0-a, 0.0, 0.0),
   or on the straight lines AS and SB (excluding the points A and B).

The present refrigerant more preferably satisfies the following requirements. In this case, the present refrigerant has a refrigerating capacity ratio of 90% or more relative to that of R410A.

### Requirements

When the mass% of HFO-1132(E), CF₃I, R1234yf, and R32 based on their sum in the refrigerant is respectively represented by x, y, z, and a, provided that 0<a≤29.2,
if 0<a≤17.3, coordinates (x,y,z) in a ternary composition diagram in which the sum of HFO-1132(E), CF₃I, and R1234yf is (100-a) mass% are within the range of a figure surrounded by straight lines CW, WD, DO, and OC that connect the following 4 points:
   point C (-0.0027a²-2.3528a+82.9, 0.0027a²+1.3528a+17.1, 0.0),
   point W (0.0045a²-2.2743a+81.5, 0.0033a²+0.7052a+8.9, - 0.0078a²+0.5692a+9.6),
   point D (0.0151a2-2.1344a+80.8, 0.0. -0.0151a²+1.1344a+19.2), and point O (100.0-a, 0.0, 0.0),
   or on the straight lines CW and WD (excluding the points C and D);
if 17.3<a≤33.1, coordinates (x,y,z) in the ternary composition diagram are within the range of a figure surrounded by straight lines CW, WD, DO, and OC that connect the following 4 points:
   point C (-0.0136a²-1.9352a+78.947, 0.0136a²+0.9352a+21.053, 0.0),
   point W (0.0045a²-2.2651a+81.337, 0.0009a²+0.765a+8.598, - 0.0054a²+0.5001a+10.065),
   point D (0.0094a²-1.923a+78.855, 0.0. -0.0094a²+0.923a+21.145), and
   point O (100.0-a, 0.0, 0.0),
   or on the straight lines CW and WD (excluding the points C and D);
if 33.1<a≤33.3, coordinates (x,y,z) in the ternary composition diagram are within the range of a figure surrounded by straight lines CW, WD, DO, OP, and PC that connect the following 5 points:
   point C (0.0, -7.5a+315.15.053, 6.5a-215.15),
   point W (0.5a-5.25, -5.0a+200.4, 3.5a-95.15),
   point D (-1.5a+75.15, 0.0. 0.5a+24.85),
   point O (100.0-a, 0.0, 0.0), and
   point P (0.0, 100.0, 0.0)),
   or on the straight lines CW and WD (excluding the points C and D); or
if 33.3<a≤51.6, coordinates (x,y,z) in the ternary composition diagram are within the range of a figure surrounded by straight lines CW, WD, DO, OP, and PC that connect the following 5 points:
   point C (0.0, 0.0795a²-9.8365a+304.81, -0.0795a²+8.8365a-204.81),
   point W (-0.00783a²+0.1576a+14.848, 0.05178a²-6.0017a+176.35, - 0.04392a²+4.8441a-91.2),
   point D (0.00837a²-1.8518a+77.595, 0.0. -
   0.00837a²+0.8518a+22.405),
   point O (100.0-a, 0.0, 0.0), and
   point P (0.0, 100.0, 0.0)),
   or on the straight lines CW and WD (excluding the points C and D).

In the above refrigerant, in terms of preventing disproportionation and in terms of refrigerating capacity, x is preferably 10 wt.% or more and 70 wt.% or less, more preferably 15 wt.% or more and 60 wt.% or less, and even more preferably 17.5 wt.% or more and 50 wt.% or less.

In the above refrigerant, in terms of preventing the deterioration of the refrigeration oil and in terms of low GWP, y is preferably 10 wt.% or more and 60 wt.% or less, more preferably 15 wt.% or more and 50 wt.% or less, and even more preferably 20 wt.% or more and 40 wt.% or less.

In the above refrigerant, in terms of low GWP and refrigerating capacity, a is preferably 2.5 wt.% or more and 29.2 wt.% or less (GWP: 200 or less), more preferably 5.0 wt.% or more and 25.5 wt.% or less (GWP: 175 or less), and even more preferably 7.5 wt.% or more and 21.8 wt.% or less (GWP: 150).

The present refrigerant may further comprise trifluoroethylene (HFO-1123).

When the present refrigerant further comprises HFO-1123, it preferably satisfies the following requirements. In this case, the refrigerant of the present disclosure has a refrigerating capacity ratio of 75% or more relative to that of R410A.

### Requirements

When the total mass% of HFO-1123 and HFO-1132(E) is represented by x, the mass% of CF₃I is represented by y, the mass% of R1234yf is represented by z, and the mass% of R32 is represented by a, provided that 0<a≤29.2, based on the sum of HFO-1123, HFO-1132 (E), CF₃I, R1234yf, and R32, and r = HFO-1123/(HFO-1123+HFO-1132(E)), provided that 0<r<1,
if 0<a≤7.0, coordinates (x,y,z) in a ternary composition diagram having the sum of HFO-1123 and HFO-1132(E) as a first vertex, CF₃I as a second vertex, and R1234yf as a third vertex are within the range of a figure surrounded by straight lines AᵣSᵣ, SᵣBᵣ, BᵣO, and OA that connect the following 4 points:
   point Aᵣ ((0.0192a²-0.3057a+8.8)r²+(0.0178a²+0.7898a-29.4)r+(-0.0167a²-2.6115a+52.1), (-0.0192a²+0.3057a-8.8)r²-(0.0178a²+0.7898a-29.4)r+(0.0167a²+1.6115a+47.9), 0.0),
   point Sᵣ ((0.022a²-0.4968a+6.6)r²+(-0.0059a²+0.8981a-19.9)r+(0.0042a²-2.2866a+48.3)), (-0.0105a²+0.2166a-3.4)r²+(-0.0123a²-0.414a+13.9)r+(0.0023a²+0.8408a+26.0), (-0.0115a²+0.2803a-3.2)r²+(0.0181a²-0.4841a+6.0)r+(-0.0066a²+0.4459a+25.7)),
   point Bᵣ ((-0.0021a²-0.3567a+6.2)r²+(0.0013a²+0.6624a-11.7)r+(0.0088a²-1.8471a+48.5), 0.0, (0.0021a²+0.3567a-6.2)r²-(0.0013a²+0.6624a-11.7)r+(-0.0088a²+0.8471a+51.5)), and
   point O (100.0-a, 0.0, 0.0),
   or on the straight lines AᵣSᵣ and SᵣBᵣ (excluding the points Aᵣ and Bᵣ);
if 7.0<a≤17.3, coordinates (x,y,z) in the ternary composition diagram are within the range of a figure surrounded by straight lines AᵣSᵣ, SᵣBᵣ, BᵣO, and OA that connect the following 4 points:
   point Aᵣ ((-0.0774a²+1.142a+3.3965)r²+(0.1316a²-0.965a-22.694)r+(-0.0423a²-2.1749a+50.299), (0.0774a²-1.142a-3.3965)r²-(0.1316a²-0.965a-22.694)r+(0.0423a²+1.1749a+49.701), 0.0),
   point Sᵣ ((0.0219a²-0.901a+10.434)r²+(-0.0265a²+1.7025a-26.018)r+(0.0136a²-2.5337a+50.071), (-0.0157a²+0.4991a-5.1221)r²+(0.012a²-0.9332a+16.343)r+(-0.0029a²+0.9539a+25.465), (0.007a²-0.014a-2.0437)r²+(-0.0052a²-0.1454a+4.7729)r+(-0.0041a²+0.3719a+26.099)),
   point Bᵣ ((0.0114a²-0.5683a+7.0195)r²+(-0.0183a²+0.9587a-12.815)r+(0.0129a²-1.857a+48.367), 0.0, (-0.0114a²+0.5683a-7.0195)r²+(0.0183a²-0.9587a+12.815)r+(-0.0129a²+0.857a+51.633)), and
   point O (100.0-a, 0.0, 0.0),
   or on the straight lines AᵣSᵣ and SᵣBᵣ (excluding the points Aᵣ and Bᵣ); or
if 17.3<a≤29.2, coordinates (x,y,z) in the ternary composition diagram are within the range of a figure surrounded by straight lines PAᵣ, AᵣSᵣ, SᵣBᵣ, BᵣO, and OP that connect the following 5 points:
   point P (0.0, 100.0-a, 0.0),
   point Aᵣ (0.0, 0.2556a²-17.615a+310.95, -0.2556a²+16.615a-210.95),
   point Sᵣ ((0.0141a²-0.7748a+10.574)r²+(-0.036a²+2.0515a-29.22)r+(0.0034a²-0.8211a+23.493), (-0.0104a²+0.5843a-8.1967)r²+(0.0289a²-1.6641a+23.933)r+(0.1285a²-8.8263a+155.32), (-0.0037a²+0.1905a-2.3774)r²+(0.0071a²-0.3874a+5.2871)r+(-0.1319a²+8.6474a-78.814)),
   point Bᵣ ((-0.0008a²-0.0129a+1.0643)r²+(-0.0077a²+0.5019a-8.0723)r+(0.0113a²-1.8198a+48.199), 0.0, (0.0008a²+0.0129a-1.0643)r²+(0.0077a²-0.5019a+8.0723)r+(-0.0113a²+0.8198a+51.801)), and
   point O (100.0-a, 0.0, 0.0),
   or on the straight lines AᵣSᵣ and SᵣBᵣ (excluding the points Aᵣ and Bᵣ).

When the present refrigerant further comprises HFO-1123, it more preferably satisfies the following requirements. In this case, the present refrigerant has a refrigerating capacity ratio of 90% or more relative to that of R410A.

### Requirements

When the total mass% of HFO-1123 and HFO-1132(E) is represented by x, the mass% of CF₃I is represented by y, the mass% of R1234yf is represented by z, and the mass% of R32 is represented by a, provided that 0<a≤29.2, based on the sum of HFO-1123, HFO-1132(E), CF₃I, R1234yf, and R32 in the refrigerant, and r = HFO-1123/(HFO-1123+HFO-1132(E)), provided that 0<r<1,
if 0<a≤17.3, coordinates (x,y,z) in a ternary composition diagram having the sum of HFO-1123 and HFO-1132(E) as a first vertex, CF₃I as a second vertex, and R1234yf as a third vertex are within the range of a figure surrounded by straight lines CᵣWᵣ, WᵣDᵣ, DᵣO, and OCᵣ that connect the following 4 points:
   point Cᵣ ((-0.0031a²-0.2355a+13.0)r²+(0.0213a²+0.5511a-41.9)r+(-0.0027a²-2.3528a+82.9), (0.0031a²+0.2355a-13.0)r²+(-0.0213a²-0.5511a+41.9)r+(0.0027a2+1.3528a+17.1), 0.0),
   point Wᵣ ((0.0184a²-0.7005a+14.2)r²+(-0.009a²+1.0629a-37.3)r+(0.0045a²-2.2743a+81.5), (-0.0536a²+0.6606a-6.0)r²+(0.0421a²-0.7805a+22.2)r+(0.0033a²+0.7052a+8.9), (0.0351a²+0.0399a-8.2)r²+(-0.0331a²-0.2824a+15.1)r+(-0.0078a²+0.5692a+9.6)),
   point Dᵣ ((0.0154a²-0.8793a+16.2)r²+(-0.0191a²+1.3765a-30.1)r+(0.0151a²-2.1344a+80.8), 0.0. (-0.0154a²+0.8793a-16.2)r²+(0.0191a²-1.3765a+30.1)r+(-0.01529a²+1.1344a+19.2)), and
   point O (100.0-a, 0.0, 0.0),
   or on the straight lines CᵣWᵣ and WᵣDᵣ (excluding the points Cᵣ and Dᵣ);
if 17.3<a≤33.1, coordinates (x,y,z) in the ternary composition diagram are within the range of a figure surrounded by straight lines CᵣWᵣ, WᵣDᵣ, DᵣO, and OCᵣ that connect the following 4 points:
   point Cᵣ ((-0.01728a²+0.3644a+6.8668)r²+(0.0335a²-0.0444a-35.267)r+(-0.0136a²-1.9352a+78.947), (0.01728a²-0.3644a-6.8668)r²+(-0.0335a²+0.0444a+35.267)r+(0.0136a²+0.9352a+21.053), 0.0),
   point Wᵣ ((0.02317a²-1.5719a+27.864)r²+(-0.0219a²+2.1686a-52.553)r+(0.0045a2-2.2651a+81.337), (-0.0963a²+5.4972a-76.891)r²+(0.0922a²-5.8047a+94.129)r+(0.0009a²+0.765a+8.598), (0.07312a²-3.9253a+49.027)r²+(-0.0703a²+3.6361a-41.576)r+(-0.0054a²+0.5001a+10.065)),
   point Dᵣ ((0.01078a²-0.8205a+16.576)r²+(-0.0156a²+1.3436a-30.573)r+(0.0094a²-1.923a+78.855), 0.0. (-0.01078a²+0.8205a-16.576)r²+(0.0156a²-1.3436a+30.573)r+(-0.0094a²+0.923a+21.145)), and
   point O (100.0-a, 0.0, 0.0),
   or on the straight lines CᵣWᵣ and WᵣDᵣ (excluding the points Cᵣ and Dᵣ);
if 33.1<a≤33.3, coordinates (x,y,z) in the ternary composition diagram are within the range of a figure surrounded by straight lines CWᵣ, WᵣDᵣ, DᵣO, OP, and PC that connect the following 5 points:
   point C (0.0, -7.5a+315.15.053, 6.5a-215.15),
   point Wᵣ ((6.0a-197.4)r²+(-6.0a+193.8)r+(0.5a-5.25), (-20.0a+661.6)r²+(20.0a-659.0)r+(-5.0a+200.4), (14.0a-464.2)r²+(-14.0a+465.2)r+(3.5a-95.15)),
   point Dᵣ ((-a+34.3)r²+(1.5a-52.85)r+(-1.5a+75.15), 0.0, (a-34.3)r²+(-1.5a+52.85)r+(0.5a+24.85)),
   point O (100.0-a, 0.0, 0.0), and
   point P (0.0, 100.0, 0.0)),
   or on the straight lines CWᵣ and WᵣDᵣ (excluding the points C and Dᵣ); or
if 33.3<a≤51.6, coordinates (x,y,z) in the ternary composition diagram are within the range of a figure surrounded by straight lines CWᵣ, WᵣDᵣ, DᵣO, OP, and PC that connect the following 5 points:
   point C (0.0, -7.5a+315.15.053, 6.5a-215.15),
   point Wᵣ (0.0073a²-0.7541a+19.376)r²+(-0.0183a²+1.8853a-48.44)r+(-0.00784a²+0.1576a+14.848), (-0.02246a²+2.1482a-51.018)r²+(0.03082-3.0a+72.712)r+(0.05178a²-6.0017a+176.35), (0.01513a²-1.3941a+31.642)r²+(-0.0125a²+1.1146a-24.273)r+(-0.04392a²+4.8441a-91.2)),
   point Dᵣ ((0.0002a²-0.0706a+3.143)r²+(-0.005a²+0.5806a-16.671)r+(0.00836a²-1.8518a+77.595), 0.0, (-0.0002a²+0.0706a-3.143)r²+(0.005a²-0.5806a+16.671)r+(-0.00836a²+0.8518a+22.405)), point O (100.0-a, 0.0, 0.0), and
   point P (0.0, 100.0, 0.0)),
   or on the straight lines CWᵣ and WᵣDᵣ (excluding the points C and Dᵣ).

In the above refrigerant, in terms of preventing disproportionation, x is preferably 70 wt.% or less, more preferably 60 wt.% or less, and even more preferably 50 wt.% or less.

In the above refrigerant, in terms of refrigerating capacity, x is preferably 10 wt.% or more, more preferably 15 wt.% or more, and even more preferably 17.5 wt.% or more.

In the above refrigerant, in terms of preventing the deterioration of the refrigeration oil, y is preferably 60 wt.% or less, more preferably 50 wt.% or less, and even more preferably 40 wt.% or less.

In the above refrigerant, in terms of low GWP, y is preferably 10 wt.% or more, more preferably 15 wt.% or more, and even more preferably 20 wt.% or more.

In the above refrigerant, in terms of low GWP, a is preferably 29.2 wt.% or less (GWP: 200 or less), more preferably 25.5 wt.% or less (GWP: 175), and even more preferably 21.8 wt.% or less (GWP: 150).

In the above refrigerant, in terms of refrigerating capacity, x is preferably 2.5 wt.% or more, more preferably 5.0 wt.% or more, and even more preferably 7.5 wt.% or more.

The present refrigerant may further comprise other additional refrigerants in addition to HFO-1132(E), CF₃I, R1234yf, and R32, as long as the above properties and effects are not impaired. In this respect, in an embodiment, the present refrigerant preferably comprises HFO-1132(E), CF₃I, R1234yf, and R32 in a total amount of 99.5 mass% or more, more preferably 99.75 mass% or more, even more preferably 99.9 mass% or more, still even more preferably 99.99 mass% or more, and most preferably 99.999 mass% or more, based on the entire refrigerant. In another embodiment, the present refrigerant preferably comprises HFO-1123, HFO-1132(E), CF₃I, and R1234yf in a total amount of 99.5 mass% or more, more preferably 99.75 mass% or more, even more preferably 99.9 mass% or more, still even more 99.99 mass% or more, and most preferably 99.999 mass% or more, based on the entire refrigerant. Further, the present refrigerant may essentially consist of HFO-1132(E), CF₃I, R1234yf, and R32, or may consist of HFO-1132(E), CF₃I, R1234yf, and R32. When the present refrigerant essentially consists of HFO-1132(E), CF₃I, R1234yf, and R32, it may further contain, in addition to these compounds, only impurities inevitably mixed in the production process of these compounds.

Such additional refrigerants are not limited, and can be selected from a wide range of refrigerants. The mixed refrigerant may comprise a single additional refrigerant, or two or more additional refrigerants.

### 1.2. Use

The present refrigerant can be preferably used as a working fluid in a refrigerating machine.

The present composition is suitable for use as an alternative refrigerant for R410A.

### 2. Refrigerant Composition

The present refrigerant composition comprises at least the present refrigerant, and can be used for the same use as the present refrigerant. Moreover, the present refrigerant composition can be further mixed with at least a refrigeration oil to thereby obtain a working fluid for a refrigerating machine.

The present refrigerant composition further comprises at least one other component in addition to the present refrigerant. The present refrigerant composition may comprise at least one of the following other components, if necessary. As described above, when the present refrigerant composition is used as a working fluid in a refrigerating machine, it is generally used as a mixture with at least a refrigeration oil. Therefore, it is preferable that the present refrigerant composition does not substantially comprise a refrigeration oil. Specifically, in the present refrigerant composition, the content of the refrigeration oil based on the entire refrigerant composition is preferably 0-1 mass%, and more preferably 0-0.1 mass%.

### 2.1. Water

The present refrigerant composition may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.

### 2.2. Tracer

A tracer is added to the present refrigerant composition at a detectable concentration such that when the refrigerant composition has been diluted, contaminated, or undergone other changes, the tracer can trace the changes.

The present refrigerant composition may comprise a single tracer, or two or more tracers.

The tracer is not limited, and can be suitably selected from commonly used tracers.

Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide (N₂O). The tracer is particularly preferably a hydrofluorocarbon, a hydrochlorofluorocarbon, a chlorofluorocarbon, a hydrochlorocarbon, a fluorocarbon, or a fluoroether.

The following compounds are preferable as the tracer.
FC-14 (tetrafluoromethane, CF₄)
HCC-40 (chloromethane, CH₃Cl)
HFC-23 (trifluoromethane, CHF₃)
HFC-41 (fluoromethane, CH₃Cl)
HFC-125 (pentafluoroethane, CF₃CHF₂)
HFC-134a (1,1,1,2-tetrafluoroethane, CF₃CH₂F)
HFC-134 (1,1,2,2-tetrafluoroethane, CHF₂CHF₂)
HFC-143a (1,1,1-trifluoroethane, CF₃CH₃)
HFC-143 (1,1,2-trifluoroethane, CHF₂CH₂F)
HFC-152a (1,1-difluoroethane, CHF₂CH₃)
HFC-152 (1,2-difluoroethane, CH₂FCH₂F)
HFC-161 (fluoroethane, CH₃CH₂F)
HFC-245fa (1,1,1,3, 3-pentafluoropropane, CF₃CH₂CHF₂)
HFC-236fa (1,1,1,3,3,3-hexafluoropropane, CF₃CH₂CF₃)
HFC-236ea (1,1,1,2,3,3-hexafluoropropane, CF₃CHFCHF₂)
HFC-227ea (1,1,1,2,3,3,3-heptafluoropropane, CF₃CHFCF₃)
HCFC-22 (chlorodifluoromethane, CHClF₂)
HCFC-31 (chlorofluoromethane, CH₂ClF)
CFC-1113 (chlorotrifluoroethylene, CF₂=CClF)
HFE-125 (trifluoromethyl-difluoromethyl ether, CF₃OCHF₂)
HFE-134a (trifluoromethyl-fluoromethyl ether, CF₃OCH₂F)
HFE-143a (trifluoromethyl-methyl ether, CF₃OCH₃)
HFE-227ea (trifluoromethyl-tetrafluoroethyl ether, CF₃OCHFCF₃)
HFE-236fa (trifluoromethyl-trifluoroethyl ether, CF₃OCH₂CF₃)

The present refrigerant composition may contain the tracer in a total amount of 10-1000 parts per million by weight (ppm), preferably 30-500 ppm, and more preferably 50-300 ppm, based on the entire refrigerant composition.

### 2.3. Ultraviolet Fluorescent Dye

The present refrigerant composition may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

### 2.4. Stabilizer

The present refrigerant composition may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is not limited. Generally, the content of the stabilizer is preferably 0.01-5 mass%, and more preferably 0.05-2 mass%, based on the entire refrigerant.

### 2.5. Polymerization Inhibitor

The present refrigerant composition may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is not limited. Generally, the content of the polymerization inhibitor is preferably 0.01-5 mass%, and more preferably 0.05-2 mass%, based on the entire refrigerant.

### 3. Refrigeration Oil-Containing Working Fluid

The present refrigeration oil-containing working fluid comprises at least the present refrigerant or the present refrigerant composition and a refrigeration oil, for use as a working fluid in a refrigerating machine. Specifically, the present refrigeration oil-containing working fluid is obtained by mixing a refrigeration oil used in a compressor of a refrigerating machine with the refrigerant or the refrigerant composition. The refrigeration oil-containing working fluid generally comprises 10-50 mass% of refrigeration oil.

### 3.1. Refrigeration Oil

The present composition may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of (5-400) x 10⁻⁶ m²/s (5-400 cSt) at 40°C is preferable from the standpoint of lubrication.

The (5-400) x 10⁻⁶ m²/s (refrigeration oil-containing working fluid may further optionally contain at least one additive. Examples of additives include compatibilizing agents described below.

### 3.2. Compatibilizing Agent

The (5-400) x 10⁻⁶ m²/s (refrigeration oil-containing working fluid may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 4. Method for Operating Refrigerating Machine

The method for operating a refrigerating machine according to the present disclosure ("the present method") is a method for operating a refrigerating machine using the present refrigerant.

Specifically, the present method comprises the step of circulating the present refrigerant in a refrigerating machine.

### Examples

The present disclosure is described in more detail below with reference to Examples.

Mixed refrigerants were prepared by mixing HFO-1132(E), CF₃I, R1234yf, and R32 at mass% shown in Table 1 based on their sum.

The GWP of R410A (R32 = 50%/R125 = 50%) and the above mixed refrigerants was evaluated based on the values stated in the Intergovernmental Panel on Climate Change (IPCC), fourth report. The GWP of HFO-1132(E), which was not stated therein, was assumed to be 1 from HFO-1132a (GWP = 1 or less) and HFO-1123 (GWP = 0.3, described in WO 2015/141678). The refrigerating capacity of R410A and the above mixed refrigerants was determined by performing theoretical refrigeration cycle calculations for the mixed refrigerants using the National Institute of Science and Technology (NIST) and Reference Fluid Thermodynamic and Transport Properties Database (Refprop 9.0) under the following conditions.

For each of these mixed refrigerants, the COP ratio and refrigerating capacity ratio relative to those of R410A were determined. The calculation conditions were as follows:
Evaporating temperature: 5°C
Condensation temperature: 45°C
Superheating temperature: 5 K
Subcooling temperature: 5 K
Compressor efficiency: 70%

Table 1 shows these values together with the GWP of each mixed refrigerant. The COP and refrigerating capacity are ratios relative to R410A.

The coefficient of performance (COP) was determined by the following formula. 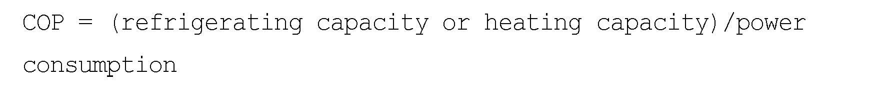 COP = (refrigerating capacity or heating capacity)/power consumption

**Table 1**

| Item | Unit | Com. Ex. 1 | Com. Ex. 2 | Com. Ex. 3 | Ex. 1 | Com. Ex. 4 | Com. Ex. 5 | Com. Ex. 6 | Com. Ex. 7 | Ex. 2 | Com. Ex. 8 | Com. Ex. 9 | Com. Ex. 10 |
|---|---|---|---|---|---|---|---|---|---|---|---|---|---|
| | | | A | A' | S | B' | B | C | C' | W | D' | D | O |
| HFO-1132 (E) | mass% | R410A | 52.1 | 49.8 | 48.3 | 47.9 | 48.5 | 82.9 | 82.1 | 81.5 | 81.1 | 80.8 | 100.0 |
| CF3I | mass% | | 47.9 | 37.4 | 26.0 | 13.5 | 0.0 | 17.1 | 13.1 | 8.9 | 4.5 | 0.0 | 0.0 |
| R1234yf | mass% | | 0.0 | 12.8 | 25.7 | 38.6 | 51.5 | 0.0 | 4.8 | 9.6 | 14.4 | 19.2 | 0.0 |
| R32 | mass% | | 0.0 | 0.0 | 0.0 | 0.0 | 0.0 | 0.0 | 0.0 | 0.0 | 00 | 0.0 | 0.0 |
| GWP | - | 2088 | 1 | 1 | 2 | 2 | 3 | 1 | 1 | 1 | 1 | 2 | 1 |
| COP ratio | % (relative to R410A) | 100.0 | 104.1 | 103.1 | 102.2 | 101.2 | 100.0 | 99.5 | 99.2 | 99.0 | 98.7 | 98.4 | 97.8 |
| Refrigerating capacity ratio | % (relative to R410A) | 100.0 | 75.0 | 75.0 | 75.0 | 75.0 | 75.0 | 90.0 | 90.0 | 90.0 | 90.0 | 90.0 | 97.2 |
| Condensation temperature glide | °C | 0.1 | 8.0 | 6.4 | 5.1 | 4.2 | 3.7 | 2.9 | 2.3 | 1.8 | 1.4 | 1.0 | 0.0 |

| Item | Unit | Com. Ex. 1 | Com. Ex. 2 | Com. Ex. 3 | Ex. 1 | Com. Ex. 4 | Com. Ex. 5 | Com. Ex. 6 | Com. Ex. 7 | Ex. 2 | Com. Ex. 8 | Com. Ex. 9 | Com. Ex. 10 |
|---|---|---|---|---|---|---|---|---|---|---|---|---|---|
| | | | A | A' | S | B' | B | C | C' | W | D' | D | O |
| HFO-1132 (E) | mass% | R410A | 52.1 | 49.8 | 48.3 | 47.9 | 48.5 | 82.9 | 82.1 | 81.5 | 81.1 | 80.8 | 100.0 |
| CF3I | mass% | | 47.9 | 37.4 | 26.0 | 13.5 | 0.0 | 17.1 | 13.1 | 8.9 | 4.5 | 0.0 | 0.0 |
| R1234yf | mass% | | 0.0 | 12.8 | 25.7 | 38.6 | 51.5 | 0.0 | 4.8 | 9.6 | 14.4 | 19.2 | 0.0 |
| R32 | mass% | | 0.0 | 0.0 | 0.0 | 0.0 | 0.0 | 0.0 | 0.0 | 0.0 | 0.0 | 0.0 | 0.0 |
| GWP | - | 0 | 1 | 1 | 2 | 2 | 3 | 1 | 1 | 1 | 1 | 2 | 1 |
| COP ratio | % (relative to R410A) | 34.6 | 104.1 | 103.1 | 102.2 | 101.2 | 100.0 | 99.5 | 99.2 | 99.0 | 98.7 | 98.4 | 97.8 |
| Refrigerating capacity ratio | % (relative to R410A) | 34.6 | 75.0 | 75.0 | 75.0 | 75.0 | 75.0 | 90.0 | 90.0 | 90.0 | 90.0 | 90.0 | 97.2 |
| Condensation temperature glide | °C | 0.0 | 8.0 | 6.4 | 5.1 | 4.2 | 3.7 | 2.9 | 2.3 | 1.8 | 1,4 | 1.0 | 0.0 |

| Item | Unit | Com. Ex. 11 | Ex. 3 | Com. Ex. 12 | Com. Ex. 13 | Ex. 4 | Com. Ex. 14 | Com. Ex. 15 | Com. Ex. 16 | Ex. 5 | Com. Ex. 17 | Com. Ex. 18 | Ex. 6 | Com. Ex. 19 | Com. Ex. 20 |
|---|---|---|---|---|---|---|---|---|---|---|---|---|---|---|---|
| | | A | S | B | C | W | D | O | A | S | B | C | W | D | O |
| HFO-1132 (E) | mass% | 33.0 | 32.5 | 36.0 | 66.3 | 65.8 | 66.6 | 93.0 | 0.0 | 10.3 | 20.1 | 41.4 | 43.5 | 48.4 | 82.7 |
| CF3I | mass% | 60.0 | 32.0 | 0.0 | 26.7 | 14.0 | 0.0 | 0.0 | 82.7 | 41.1 | 0.0 | 41.3 | 22.1 | 0.0 | 0.0 |
| R1234yf | mass% | 0.0 | 28.5 | 57.0 | 0.0 | 13.2 | 26.4 | 0.0 | 0.0 | 31.3 | 62.6 | 0.0 | 17.1 | 34.3 | 0.0 |
| R32 | mass% | 7.0 | 7.0 | 7.0 | 7.0 | 7.0 | 7.0 | 7.0 | 17.3 | 17.3 | 17.3 | 17.3 | 17.3 | 17.3 | 17.3 |
| GWP | - | 48 | 49 | 50 | 48 | 49 | 50 | 48 | 118 | 119 | 119 | 118 | 118 | 119 | 118 |
| COP ratio | % (relative to R410A) | 104.3 | 102.3 | 100.3 | 99.7 | 99.1 | 98.3 | 97.3 | 104.7 | 102.4 | 101.1 | 99.8 | 99.4 | 98.5 | 97.0 |
| Refrigerating capacity ratio | % (relative to R410A) | 75.0 | 75.0 | 75.0 | 90.0 | 90.0 | 90.0 | 100.3 | 75.0 | 75.0 | 75.0 | 90.0 | 90.0 | 90.0 | 104.1 |
| Condensation temperature glide | °C | 11.5 | 6.7 | 5.0 | 4.6 | 3.0 | 1.8 | 0.2 | 18.0 | 7.8 | 5.8 | 6.3 | 4.0 | 2.7 | 0.3 |

| Item | Unit | Com. Ex. 21 | Ex. 7 | Com. Ex. 222 | Com. Ex. 23 | Ex. 8 | Com. Ex. 24 | Com. Ex. 25 | Com. Ex. 26 | Ex. 9 | Com. Ex. 27 | Com. Ex. 28 | Ex. 10 | Com. Ex. 29 | Com. Ex. 30 |
|---|---|---|---|---|---|---|---|---|---|---|---|---|---|---|---|
| | | A | S | B | C | W | D | O | A | S | B | C | W | D | 0 |
| HFO-1132 (E) | mass% | 0.0 | 7.2 | 13.9 | 30.3 | 34.1 | 41.4 | 78.2 | 0.0 | 0.1 | 0.3 | 0.0 | 11.3 | 25.5 | 66.9 |
| CF3I | mass% | 48.4 | 24.0 | 0.0 | 47.9 | 25.7 | 0.0 | 0.0 | 0.7 | 0.3 | 0.0 | 66.9 | 34.9 | 0.0 | 0.0 |
| R1234yf | mass% | 29.8 | 47.0 | 64.3 | 0.0 | 18.4 | 36.8 | 0.0 | 66.2 | 66.5 | 66.6 | 0.0 | 20.7 | 41.4 | 0.0 |
| R32 | mass% | 21.8 | 21.8 | 21.8 | 21.8 | 21.8 | 21.8 | 21.8 | 33.1 | 33.1 | 33.1 | 33.1 | 33.1 | 33.1 | 33.1 |
| GWP | - | 149 | 149 | 150 | 148 | 148 | 149 | 148 | 226 | 226 | 226 | 0 | 225 | 225 | 224 |
| COP ratio | % (relative to R410A) | 102.3 | 102.0 | 101.5 | 99.6 | 99.5 | 98.8 | 97.0 | 102.5 | 102.5 | 98.5 | 0.0 | 100.3 | 99.7 | 97.2 |
| Refrigerating capacity ratio | % (relative to R410A) | 75.0 | 75.0 | 75.0 | 90.0 | 90.0 | 90.0 | 105.5 | 75.0 | 75.0 | 100.0 | 90.0 | 90.0 | 90.0 | 108.6 |
| Condensation temperature glide | °C | 8.1 | 6.3 | 5.8 | 6.6 | 4.1 | 2.9 | 0.2 | 5.0 | 5.0 | 5.0 | 5.4 | 3.7 | 3.1 | 0.1 |

| Item | Unit | Com. Ex. 31 | Com. Ex. 32 | Ex. 11 | Com. Ex. 33 | Com. Ex. 34 | Com. Ex. 35 | Ex. 12 | Com. Ex. 36 | Com. Ex. 37 | Com. Ex. 38 | Ex. 13 | Com. Ex. 39 | Com. Ex. 40 |
|---|---|---|---|---|---|---|---|---|---|---|---|---|---|---|
| | | A=S=B | C | W | D | O | C | W | D | O | C | W | D | O |
| HFO-1132 (E) | mass% | 0.0 | 0.0 | 11.4 | 25.2 | 66.7 | 0.0 | 6.6 | 12.3 | 56.0 | 0.0 | 2.1 | 4.3 | 48.4 |
| CF3I | mass% | 0.0 | 65.4 | 33.9 | 0.0 | 0.0 | 25.9 | 12.5 | 0.0 | 0.0 | 8.9 | 4.5 | 0.0 | 0.0 |
| R1234yf | mass% | 66.7 | 1.3 | 21.4 | 41.5 | 0.0 | 30.1 | 36.9 | 43.7 | 0.0 | 39.5 | 41.8 | 44.1 | 0.0 |
| R32 | mass% | 33.3 | 33.3 | 33.3 | 33.3 | 33.3 | 44.0 | 44.0 | 44.0 | 44.0 | 51.6 | 51.6 | 51.6 | 51.6 |
| GWP | - | 227 | 225 | 226 | 227 | 225 | 298 | 299 | 299 | 298 | 350 | 350 | 350 | 349 |
| COP ratio | % (relative to R410A) | 102.5 | 97.5 | 100.3 | 99.7 | 97.2 | 101.3 | 101.1 | 100.9 | 97.7 | 101.8 | 101.8 | 101.7 | 98.1 |
| Refrigerating capacity ratio | % (relative to R410A) | 75.0 | 90.0 | 90.0 | 90.0 | 108.6 | 90.0 | 90.0 | 90.0 | 110.7 | 90.0 | 90.0 | 90.0 | 111.7 |
| Condensation temperature glide | °C | 5.0 | 5.3 | 3.7 | 3.1 | 0.1 | 2.7 | 2.8 | 2.9 | 0.0 | 2.4 | 2.4 | 2.5 | 0.0 |

Approximate expressions indicating the coordinates of each point were obtained by determining approximate expressions for the curves connecting three points, as shown in Tables 2 and 3.

**Table 2**

| Point A approximate expression | | | | | | | | | | |
|---|---|---|---|---|---|---|---|---|---|---|
| a=R32 | mass% | 0.0 | 3.3 | 7.0 | 7.0 | 14.4 | 17.3 | 17.3 | 21.8 | 29.2 |
| x=HFO-1132 (E) | mass% | 52.1 | 43.3 | 33.0 | 33.0 | 10.2 | 0.0 | 0.0 | 0.0 | 0.0 |
| y=CF3I | mass% | 47.9 | 53.4 | 60.0 | 60.0 | 75.4 | 82.7 | 82.7 | 48.4 | 14.5 |
| z=R1234yf | mass% | 0.0 | 0.0 | 0.0 | 0.0 | 0.0 | 0.0 | 0.0 | 29.8 | 56.3 |
| Approximate expression representing x with a | | -0.0167a²-2.6115a+52.1 | | | -0.0423a²-2.1749a+50.299 | | | 0.0 | | |
| Approximate expression representing y with a | | 0.0167a²+1.6115a+47.9 | | | 0.0423a²+1.1749a+49.701 | | | 0.2556a²-17.615a+310.95 | | |
| Approximate expression representing z with a | | 0.0 | | | 0.0 | | | -0.2556a²+16.615a-210.95 | | |

| Point S approximate expression | | | | | | | | | | |
|---|---|---|---|---|---|---|---|---|---|---|
| a=R32 | mass% | 0.0 | 3.3 | 7.0 | 7.0 | 14.4 | 17.3 | 17.3 | 21.8 | 29.2 |
| x=HFO-1132 (E) | mass% | 48.3 | 40.8 | 32.5 | 32.5 | 16.4 | 10.3 | 10.3 | 7.2 | 2.4 |
| y=CF3I | mass% | 26.0 | 28.8 | 32.0 | 32.0 | 38.6 | 41.1 | 41.1 | 24.0 | 7.2 |
| z=R1234yf | mass% | 25.7 | 27.1 | 28.5 | 28.5 | 30.6 | 31.3 | 31.3 | 47.0 | 61.2 |
| Approximate expression representing x with a | | 0.0042a²-2.2866a+48.3 | | | 0.007a²-2.3257a+48.437 | | | 0.0034a²-0.8211a+23.493 | | |
| Approximate expression representing y with a | | 0.0023a²+0.8408a+26.0 | | | -0.0029a²+0.9539a+25.465 | | | 0.1285a²-8.8263a+155.32 | | |
| Approximate expression representing z with a | | -0.0065a²+0.4458a+25.7 | | | -0.0041a²+0.3718a+26.098 | | | -0.1319a²+8.6474a-78.813 | | |

| Point B approximate expression | | | | | | | | | | |
|---|---|---|---|---|---|---|---|---|---|---|
| a=R32 | mass% | 0.0 | 3.3 | 7.0 | 7.0 | 14.4 | 17.3 | 17.3 | 21.8 | 29.2 |
| x=HFO-1132 (E) | mass% | 48.5 | 42.5 | 36.0 | 36.0 | 24.3 | 20.1 | 20.1 | 13.9 | 4.7 |
| y=CF3I | mass% | 0.0 | 0.0 | 0.0 | 0.0 | 0.0 | 0.0 | 0.0 | 0.0 | 0.0 |
| z=R1234yf | mass% | 51.5 | 54.2 | 57.0 | 57.0 | 61.3 | 62.6 | 62.6 | 64.3 | 66.1 |
| Approximate expression representing x with a | | 0.0088a²-1.8471a+48.5 | | | 0.0129a²-1.857a+48.367 | | | 0.0113a²-1.8198a+48.199 | | |
| Approximate expression representing y with a | | 0.0 | | | 0.0 | | | 0.0 | | |
| Approximate expression representing z with a | | -0.0088a²+0.8471a+51.5 | | | -0.0129a²+0.857a+51.633 | | | -0.0113a²+0.8198a+51.801 | | |

**Table 3**

| Point C approximate expression | | | | | | | | | | | | |
|---|---|---|---|---|---|---|---|---|---|---|---|---|
| a=R32 | mass% | 0.0 | 7.0 | 17.3 | 17.3 | 21.8 | 33.1 | 33.1 | 33.3 | 33.3 | 44.0 | 51.6 |
| x=HFO-1132 (E) | mass% | 82.9 | 66.3 | 41.4 | 41.4 | 30.3 | 0.0 | 0.0 | 0.0 | 0.0 | 0.0 | 0.0 |
| y=CF3I | mass% | 17.1 | 26.7 | 41.3 | 41.3 | 47.9 | 66.9 | 66.9 | 65.4 | 65.4 | 25.9 | 8.9 |
| z=R1234yf | mass% | 0.0 | 0.0 | 0.0 | 0.0 | 0.0 | 0.0 | 0.0 | 1.3 | 1.3 | 30.1 | 39.5 |
| Approximate expression representing x with a | | -0.0027a²-2.3528a+82.9 | | | -0.0136a²-1.9352a+78.947 | | | 0 | | 0 | | |
| Approximate expression representing y with a | | 0.0027a²+1.3528a+17.1 | | | 0.0136a²+0.9352a+21.053 | | | -7.5a+315.15 | | 0.0795a²-9.8365a+304.81 | | |
| Approximate expression representing z with a | | 0.0 | | | 0.0 | | | 6.5a-215.15 | | -0.0795a²+8.8365a-204.81 | | |

| Point W approximate expression | | | | | | | | | | | | |
|---|---|---|---|---|---|---|---|---|---|---|---|---|
| a=R32 | mass% | 0.0 | 7.0 | 17.3 | 17.3 | 21.8 | 33.1 | 33.1 | 33.3 | 33.3 | 44.0 | 51.6 |
| x=HFO-1132 (E) | mass% | 81.5 | 65.8 | 43.5 | 43.5 | 34.1 | 11.3 | 11.3 | 11.4 | 11.4 | 6.6 | 2.1 |
| y=CF3I | mass% | 8.9 | 14.0 | 22.1 | 22.1 | 25.7 | 34.9 | 34.9 | 33.9 | 33.9 | 12.5 | 4.5 |
| z=R1234yf | mass% | 9.6 | 13.2 | 17.1 | 17.1 | 18.4 | 20.7 | 20.7 | 21.4 | 21.4 | 36.9 | 41.8 |
| Approximate expression representing x with a | | 0.0045a²-2.2743a+81.5 | | | 0.0045a²-2.2651a+81.337 | | | 0.5a-5.25 | | -0.00783a²+0.1576a+14.848 | | |
| Approximate expression representing y with a | | 0.0033a²+0.7052a+8.9 | | | 0.0009a²+0.765a+8.598 | | | -5.0a+200.4 | | 0.05178a²-6.0017a+176.35 | | |
| Approximate expression representing z with a | | -0.0078a²+0.5692a+9.6 | | | -0.0054a²+0.5001a+10.065 | | | 3.5a-95.15 | | -0.04392a²+4.8441a-91.2 | | |

| Point D approximate expression | | | | | | | | | | | | |
|---|---|---|---|---|---|---|---|---|---|---|---|---|
| a=R32 | mass% | 0.0 | 7.0 | 17.3 | 17.3 | 21.8 | 33.1 | 33.1 | 33.3 | 33.3 | 44.0 | 51.6 |
| x=HFO-1132 (E) | mass% | 80.8 | 66.6 | 48.4 | 48.4 | 41.4 | 25.5 | 25.5 | 25.2 | 25.2 | 12.3 | 4.3 |
| y=CF3I | mass% | 0.0 | 0.0 | 0.0 | 0.0 | 0.0 | 0.0 | 0.0 | 0.0 | 0.0 | 0.0 | 0.0 |
| z=R1234yf | mass% | 19.2 | 26.4 | 34.3 | 34.3 | 36.8 | 41.4 | 41.4 | 41.5 | 41.5 | 43.7 | 44.1 |
| Approximate expression representing x with a | | 0.0151a²-2.1344a+80.8 | | | 0.0094a²-1.923a+78.855 | | | -1.5a+75.15 | | 0.00837a²-1.8518a+77.595 | | |
| Approximate expression representing y with a | | 0.0 | | | 0.0 | | | 0 | | 0.0 | | |
| Approximate expression representing z with a | | -0.0151a²+1.1344a+19.2 | | | -0.0094a²+0.923a+21.145 | | | 0.5a+24.85 | | -0.00837a²+0.8518a+22.405 | | |

These results demonstrate that the mixed refrigerants have a refrigerating capacity ratio of 75% or more relative to that of R410A when they satisfy the following requirements.

### Requirements

When the mass% of HFO-1132(E), CF₃I, R1234yf, and R32 based on their sum in the refrigerant is respectively represented by x, y, z, and a, provided that 0<a≤29.2,
if 0<a≤7.0, coordinates (x,y,z) in a ternary composition diagram in which the sum of HFO-1132(E), CF₃I, and R1234yf is (100-a) mass% are within the range of a figure surrounded by straight lines AS, SB, BO, and OA that connect the following 4 points:
   point A (-0.0167a²-2.6115a+52.1, 0.0167a²+1.6115a+47.9, 0.0),
   point S (0.0042a²-2.2866a+48.3, 0.0023a²+0.8408a+26.0, - 0.0065a²+0.4458a+25.7),
   point B (0.0088a²-1.8471a+48.5, 0.0, -0.0088a²+0.8471a+51.5), and
   point O (100.0-a, 0.0, 0.0),
   or on the straight lines AS and SB (excluding the points A and B);
if 7.0<a≤17.3, coordinates (x,y,z) in the ternary composition diagram are within the range of a figure surrounded by straight lines AS, SB, BO, and OA that connect the following 4 points:
   point A (-0.0423a²-2.1749a+50.299, 0.0423a²+1.1749a+49.701, 0.0),
   point S (0.007a²-2.3257a+48.437, -0.0029a²+0.9539a+25.465, - 0.0041a²+0.3718a+26.098),
   point B (0.0129a²-1.857a+48.367, 0.0, -0.0129a²+0.857a+51.633), and
   point O (100.0-a, 0.0, 0.0),
   or on the straight lines AS and SB (excluding the points A and B); or
if 17.3<a≤29.2, coordinates (x,y,z) in the ternary composition diagram are within the range of a figure surrounded by straight lines PA, AS, SB, BO, and OP that connect the following 5 points:
   point P (0.0, 100.0-a, 0.0),
   point A (0.0, 0.2556a²-17.615a+310.95, -0.2556a²+16.615a-210.95),
   point S (0.0034a²-0.8211a+23.493, 0.1285a²-8.8263a+155.32, - 0.1319a²+8.6474a-78.813),
   point B (0.0113a²-1.8198a+48.199, 0.0, -0.0113a²+0.8198a+51.801), and
   point O (100.0-a, 0.0, 0.0),
   or on the straight lines AS and SB (excluding the points A and B).

These results demonstrate that the mixed refrigerants have a refrigerating capacity ratio of 90% or more relative to that of R410A when they satisfy the following requirements.

### Requirements

When the mass% of HFO-1132(E), CF₃I, R1234yf, and R32 based on their sum in the refrigerant is respectively represented by x, y, z, and a, provided that 0<a≤29.2,
if 0<a≤17.3, coordinates (x,y,z) in a ternary composition diagram in which the sum of HFO-1132(E), CF₃I, and R1234yf is (100-a) mass% are within the range of a figure surrounded by straight lines CW, WD, DO, and OC that connect the following 4 points:
   point C (-0.0027a²-2.3528a+82.9, 0.0027a²+1.3528a+17.1, 0.0),
   point W (0.0045a²-2.2743a+81.5, 0.0033a²+0.7052a+8.9, - 0.0078a²+0.5692a+9.6),
   point D (0.0151a2-2.1344a+80.8, 0.0. -0.0151a²+1.1344a+19.2), and
   point O (100.0-a, 0.0, 0.0),
   or on the straight lines CW and WD (excluding the points C and D);
if 17.3<a≤33.1, coordinates (x,y,z) in the ternary composition diagram are within the range of a figure surrounded by straight lines CW, WD, DO, and OC that connect the following 4 points:
   point C (-0.0136a²-1.9352a+78.947, 0.0136a²+0.9352a+21.053, 0.0),
   point W (0.0045a²-2.2651a+81.337, 0.0009a²+0.765a+8.598, - 0.0054a²+0.5001a+10.065),
   point D (0.0094a²-1.923a+78.855, 0.0. -0.0094a²+0.923a+21.145), and
   point O (100.0-a, 0.0, 0.0),
   or on the straight lines CW and WD (excluding the points C and D);
if 33.1<a≤33.3, coordinates (x,y,z) in the ternary composition diagram are within the range of a figure surrounded by straight lines CW, WD, DO, OP, and PC that connect the following 5 points:
   point C (0.0, -7.5a+315.15.053, 6.5a-215.15),
   point W (0.5a-5.25, -5.0a+200.4, 3.5a-95.15),
   point D (-1.5a+75.15, 0.0. 0.5a+24.85),
   point O (100.0-a, 0.0, 0.0), and
   point P (0.0, 100.0, 0.0)),
   or on the straight lines CW and WD (excluding the points C and D); or
if 33.3<a≤51.6, coordinates (x,y,z) in the ternary composition diagram are within the range of a figure surrounded by straight lines CW, WD, DO, OP, and PC that connect the following 5 points:
   point C (0.0, 0.0795a²-9.8365a+304.81, -0.0795a²+8.8365a-204.81),
   point W (-0.00783a²+0.1576a+14.848, 0.05178a²-6.0017a+176.35, - 0.04392a²+4.8441a-91.2),
   point D (0.00837a²-1.8518a+77.595, 0.0. - 0.00837a²+0.8518a+22.405),
   point O (100.0-a, 0.0, 0.0), and
   point P (0.0, 100.0, 0.0)),
   or on the straight lines CW and WD (excluding the points C and D).

Mixed refrigerants further comprising HFO-1123 in addition to HFO-1132(E), CF₃I, R1234yf, and R32 were evaluated in the same manner as described above. Table 4 shows the results.

**Table 4**

| Item | Unit | Comp. Ex. 41 | Ex. 14 | Comp. Ex. 42 | Comp. Ex. 43 | Ex. 15 | Comp. Ex. 44 | Comp. Ex. 45 | Ex. 16 | Comp. Ex. 46 | Comp. Ex. 47 | Ex. 17 | Comp. Ex. 48 |
|---|---|---|---|---|---|---|---|---|---|---|---|---|---|
| | | A_{r=0.5} | S_{r=0.5} | B_{r=0.5} | C_{r=0.5} | W_{r=0.5} | D_{r=0.5} | A_{r=1.0} | S_{r=1.0} | B_{r=1.0} | C_{r=1.0} | W_{r=1.0} | D_{r=1.0} |
| HFO-1132 (E) +HFO-1123 | mass% | 39.6 | 40.0 | 44.2 | 65.2 | 66.4 | 69.8 | 31.5 | 35.0 | 43.0 | 54.0 | 58.4 | 66.9 |
| CF3I | mass% | 60.4 | 32.1 | 0.0 | 34.8 | 18.5 | 0.0 | 68.5 | 36.5 | 0.0 | 46.0 | 25.1 | 0.0 |
| R1234yf | mass% | 0.0 | 27.9 | 55.8 | 0.0 | 15.1 | 30.2 | 0.0 | 28.5 | 57.0 | 0.0 | 16.5 | 33.1 |
| R32 | mass% | 0.0 | 0.0 | 0.0 | 0.0 | 0.0 | 0.0 | 0.0 | 0.0 | 0.0 | 0.0 | 0.0 | 0.0 |
| GWP | - | 1 | 2 | 3 | 1 | 1 | 2 | 1 | 2 | 3 | 1 | 1 | 2 |
| COP ratio | % (relative to R410A) | 103.1 | 101.0 | 99.1 | 97.6 | 96.9 | 95.8 | 101.6 | 99.6 | 98.4 | 94.3 | 94.7 | 94.2 |
| Refrigerating capacity ratio | % (relative to R410A) | 75.0 | 75.0 | 75.0 | 90.0 | 90.0 | 90.0 | 75.0 | 75.0 | 75.0 | 90.0 | 90.0 | 90.0 |
| Condensation temperature glide | °C | 13.0 | 8.0 | 6.4 | 6.5 | 4.4 | 3.1 | 15.5 | 9.2 | 7.9 | 6.0 | 4.4 | 3.9 |

| Item | Unit | Comp. Ex. 49 | Ex. 18 | Comp. Ex. 50 | Comp. Ex. 51 | Ex. 19 | Comp. Ex. 52 | Comp. Ex. 53 | Ex. 20 | Comp. Ex. 54 | Comp. Ex. 54 | Ex. 21 | Comp. Ex. 55 |
|---|---|---|---|---|---|---|---|---|---|---|---|---|---|
| | | Ar=0.5 | Sr=0.5 | Br=0.5 | Cr=0.5 | Wr=0.5 | Dr=0.5 | Ar=1.0 | Sr=1.0 | Br=1.0 | Cr=1.0 | Wr=1.0 | Dr=1.0 |
| HFO-1132 (E) +HFO-1123 | mass% | 23.4 | 26.6 | 33.4 | 50.6 | 53.2 | 58.6 | 17.6 | 22.8 | 32.6 | 40.5 | 45.7 | 56.0 |
| CF3I | mass% | 69.6 | 36.6 | 0.0 | 42.4 | 22.4 | 0.0 | 75.4 | 40.0 | 0.0 | 52.5 | 28.8 | 0.0 |
| R1234yf | mass% | 0.0 | 29.8 | 59.6 | 0.0 | 17.4 | 34.4 | 0.0 | 30.2 | 60.4 | 0.0 | 18.5 | 37.0 |
| R32 | mass% | 7.0 | 7.0 | 7.0 | 7.0 | 7.0 | 7.0 | 7.0 | 7.0 | 7.0 | 7.0 | 7.0 | 7.0 |
| GWP | - | 48 | 49 | 50 | 48 | 49 | 49 | 48 | 49 | 50 | 48 | 49 | 49 |
| COP ratio | % (relative to R410A) | 104.0 | 101.6 | 99.9 | 98.1 | 97.6 | 96.6 | 103.6 | 100.9 | 99.6 | 95.3 | 96.1 | 95.7 |
| Refrigerating capacity ratio | % (relative to R410A) | 75.0 | 75.0 | 75.0 | 90.0 | 90.0 | 90.0 | 75.0 | 75.0 | 75.0 | 90.0 | 90.0 | 90.0 |
| Condensation temperature glide | °C | 15.5 | 8.6 | 6.8 | 7.3 | 4.9 | 3.6 | 17.8 | 9.6 | 8.0 | 7.2 | 5.1 | 4.5 |

| Item | Unit | Comp. Ex. | Ex. 22 | Comp. Ex. | Comp. Ex. | Ex. 22 | Comp. Ex. | Comp. Ex. | Ex. 23 | Comp. Ex. | Comp. Ex. | Ex. 24 | Comp. Ex. |
|---|---|---|---|---|---|---|---|---|---|---|---|---|---|
| | | Ar=0.5 | Sr=0.5 | Br=0.5 | Cr=0.5 | Wr=0.5 | Dr=0.5 | Ar=1.0 | Sr=1.0 | Br=1.0 | Cr=1.0 | Wr=1.0 | Dr=1.0 |
| HFO-1132 (E) +HFO-1123 | mass% | 0.0 | 8.4 | 19.4 | 30.4 | 34.6 | 43.8 | 0.0 | 7.2 | 19.0 | 23.4 | 29.5 | 42.0 |
| CF3I | mass% | 82.7 | 42.7 | 0.0 | 52.3 | 30.1 | 0.0 | 82.7 | 43.7 | 0.0 | 59.3 | 32.8 | 0.0 |
| R1234yf | mass% | 0.0 | 31.6 | 63.3 | 0.0 | 18.0 | 38.9 | 0.0 | 31.8 | 63.7 | 0.0 | 20.4 | 40.7 |
| R32 | mass% | 17.3 | 17.3 | 17.3 | 17.3 | 17.3 | 17.3 | 17.3 | 17.3 | 17.3 | 17.3 | 17.3 | 17.3 |
| GWP | - | 118 | 119 | 120 | 118 | 118 | 119 | 118 | 119 | 120 | 118 | 118 | 119 |
| COP ratio | % (relative to R410A) | 104.7 | 102.1 | 100.9 | 98.2 | 98.6 | 97.8 | 104.7 | 101.9 | 100.9 | 96.2 | 97.8 | 97.5 |
| Refrigerating capacity ratio | % (relative to R410A) | 75.0 | 75.0 | 75.1 | 90.0 | 90.0 | 90.0 | 75.0 | 75.0 | 75.0 | 90.0 | 90.0 | 90.0 |
| Condensation temperature glide | °C | 18.0 | 8.2 | 6.6 | 7.4 | 5.0 | 3.9 | 18.0 | 8.5 | 7.1 | 7.4 | 5.0 | 4.6 |

| Item | Unit | Comp. Ex. | Ex. 25 | Comp. Ex. | Comp. Ex. | Ex. 26 | Comp. Ex. | Comp. Ex. | Ex. 27 | Comp. Ex. | Comp. Ex. | Ex. 28 | Comp. Ex. |
|---|---|---|---|---|---|---|---|---|---|---|---|---|---|
| | | Ar=0.5 | Sr=0.5 | Br=0.5 | Cr=0.5 | Wr=0.5 | Dr=0.5 | Ar=1.0 | Sr=1.0 | Br=1.0 | Cr=1.0 | Wr=1.0 | Dr=1.0 |
| HFO-1132 (E) +HFO-1123 | mass% | 0.0 | 6.5 | 13.6 | 21.8 | 27.4 | 38.0 | 0.0 | 6.0 | 13.5 | 16.6 | 23.0 | 36.5 |
| CF3I | mass% | 48.4 | 24.6 | 0.0 | 56.4 | 30.7 | 0.0 | 48.4 | 25.0 | 0.0 | 61.6 | 34.3 | 0.0 |
| R1234yf | mass% | 29.8 | 47.1 | 64.6 | 0.0 | 20.1 | 40.2 | 29.8 | 47.2 | 64.7 | 0.0 | 20.9 | 41.7 |
| R32 | mass% | 21.8 | 21.8 | 21.8 | 21.8 | 21.8 | 21.8 | 21.8 | 21.8 | 21.8 | 21.8 | 21.8 | 21.8 |
| GWP | - | 149 | 149 | 150 | 148 | 149 | 149 | 149 | 149 | 150 | 148 | 149 | 149 |
| COP ratio | % (relative to R410A) | 102.3 | 102.3 | 101.4 | 98.0 | 99.0 | 98.3 | 102.3 | 102.3 | 101.3 | 96.5 | 98.5 | 98.2 |
| Refrigerating capacity ratio | % (relative to R410A) | 75.0 | 75.0 | 75.0 | 90.0 | 90.0 | 90.0 | 75.0 | 75.0 | 75.0 | 90.0 | 90.0 | 90.0 |
| Condensation temperature glide | °C | 8.1 | 6.6 | 6.2 | 7.1 | 4.6 | 3.9 | 8.1 | 6.7 | 6.6 | 7.0 | 4.8 | 4.4 |
| | | | | | | | | | | | | | |

| Item | Unit | Ex. 28 | Comp. Ex. | Ex. 29 | Comp. Ex. | Ex. 29 | Comp. Ex. | Ex. 30 | Comp. Ex. |
|---|---|---|---|---|---|---|---|---|---|
| | | Sr=0.5 | Br=0.5 | Wr=0.5 | Dr=0.5 | Sr=1.0 | Br=1.0 | Wr=1.0 | Dr=1.0 |
| HFO-1132 (E) +HFO-1123 | mass% | 0.1 | 0.2 | 9.2 | 24.2 | 0.2 | 0.2 | 7.7 | 23.5 |
| CF3I | mass% | 0.3 | 0.0 | 36.3 | 0.0 | 0.2 | 0.0 | 37.5 | 0.0 |
| R1234yf | mass% | 66.5 | 66.7 | 21.4 | 42.7 | 66.5 | 66.7 | *21.7* | 43.4 |
| R32 | mass% | 33.1 | 33.1 | 33.1 | 33.1 | 33.1 | 33.1 | 33.1 | 33.1 |
| GWP | - | 226 | 226 | 225 | 225 | 226 | 226 | 225 | 225 |
| COP ratio | % (relative to R410A) | 102.5 | 102.5 | 100.1 | 99.7 | 102.5 | 102.5 | 100.0 | 99.7 |
| Refrigerating capacity ratio | % (relative to R410A) | 75.0 | 75.0 | 90.0 | 90.0 | 75.0 | 75.0 | 90.0 | 90.0 |
| Condensation temperature glide | °C | 5.0 | 5.0 | 3.8 | 3.6 | 5.0 | 5.0 | 3.8 | 3.9 |

| Item | Unit | Ex. 31 | Comp. Ex. 72 | Ex. 32 | Comp. Ex. 73 | Ex. 33 | Comp. Ex. 74 | Ex. 34 | Comp. Ex. 75 | Ex. 35 | Comp. Ex. 76 | Ex. 36 | Comp. Ex. 77 |
|---|---|---|---|---|---|---|---|---|---|---|---|---|---|
| | | Wr=0.5 | Dr=0.5 | Wr=1.0 | Dr=1.0 | Wr=0.5 | Dr=0.5 | Wr=1.0 | Dr=1.0 | Wr=0.5 | Dr=0.5 | Wr=1.0 | Dr=1.0 |
| HFO-1132 (E) +HFO-1123 | mass% | 9.0 | 24.0 | 7.8 | 23.3 | 6.2 | 12.0 | 6.0 | 11.9 | 2.1 | 4.3 | 2.1 | 4.3 |
| CF3I | mass% | 36.3 | 0.0 | 36.5 | 0.0 | 12.7 | 0.0 | 12.9 | 0.0 | 4.5 | 0.0 | 4.5 | 0.0 |
| R1234yf | mass% | 21.4 | 42.7 | 22.4 | 43.4 | 37.1 | 44.0 | 37.1 | 44.1 | 41.8 | 44.1 | 41.8 | 44.1 |
| R32 | mass% | 33.3 | 33.3 | 33.3 | 33.3 | 44.0 | 44.0 | 44.0 | 44.0 | 51.6 | 51.6 | 51.6 | 51.6 |
| GWP | - | 226 | 227 | 226 | 227 | 299 | 299 | 299 | 299 | 350 | 350 | 350 | 350 |
| COP ratio | % (relative to R410A) | 100.1 | 99.7 | 100.0 | 99.7 | 101.1 | 100.9 | 101.1 | 101.0 | 101.8 | 101.7 | 101.8 | 101.8 |
| Refrigerating capacity ratio | % (relative to R410A) | 90.0 | 90.1 | 90.0 | 90.0 | 90.0 | 90.0 | 90.0 | 90.0 | 90.0 | 90.0 | 90.0 | 90.0 |
| Condensation temperature glide | °C | 3.7 | 3.6 | 3.7 | 3.8 | 2.8 | 3.0 | 2.9 | 3.1 | 2.4 | 2.5 | 2.5 | 2.5 |

Approximate expressions indicating the coordinates of each point were obtained by determining approximate expressions for the curves connecting three points, as shown in Tables 5 to 7.

**Table 5**

| Aᵣ approximate expression | | | | | | | | | |
|---|---|---|---|---|---|---|---|---|---|
| r=HFO-1123/ (HFO-1123+HFO-1132E) | 0.0 | 0.5 | 1.0 | 0.0 | 0.5 | 1.0 | 0.0 | 0.5 | 1.0 |
| x-(HFO-1132 (E) +HFO-1123) | 52.1 | 39.6 | 31.5 | 43.3 | 32.0 | 24.7 | 33.0 | 23.4 | 17.6 |
| y=CF3I | 47.9 | 60.4 | 68.5 | 53.4 | 64.7 | 72.0 | 60.0 | 69.6 | 75.4 |
| z=R1234yf | 0.0 | 0.0 | 0.0 | 0.0 | 0.0 | 0.0 | 0.0 | 0.0 | 0.0 |
| Approximate expression representing x with r | 8.8r²-29.4r+52.1 | | | 8.0r²-26.6r+43.3 | | | 7.6r²-23.0r+33.0 | | |
| a=R32 | 0.0 | | | 3.3 | | | 7.0 | | |
| Quadratic coefficient | 8.8 | | | 8.0 | | | 7.6 | | |
| Linear coefficient | -29.4 | | | -26.6 | | | -23.0 | | |
| Zero coefficient | 52.1 | | | 43.3 | | | 33.0 | | |
| x approximate expression represented by r and a | (0.0192a²-0.3057a+8.8)r²+(0.0178a²+0.7898a-29.4)r+(-0.0167a²-2.6115a+52.1) | | | | | | | | |
| y approximate expression represented by r and a | (-0.0192a²+0.3057a-8.8)r²-(0.0178a²+0.7898a-29.4)r+(0.0167a²+1.6115a+47.9) | | | | | | | | |
| z approximate expression represented by r and a | 0.0 | | | | | | | | |

| Aᵣ approximate expression | | | | | | | | | |
|---|---|---|---|---|---|---|---|---|---|
| r=HFO-1123/ (HFO-1123+HFO-1132E) | 0.0 | 0.5 | 1.0 | 0.0 | 0.5 | 1.0 | 0.0 | 0.5 | 1.0 |
| x-(HFO-1132 (E) +HFO-1123) | 33.0 | 23.4 | 17.6 | 10.2 | 6.5 | 4.7 | 0.0 | 0.0 | 0.0 |
| y=CF3I | 60.0 | 69.6 | 75.4 | 75.4 | 79.1 | 80.9 | 82.7 | 82.7 | 82.7 |
| z=R1234yf | 0.0 | 0.0 | 0.0 | 0.0 | 0.0 | 0.0 | 0.0 | 0.0 | 0.0 |
| Approximate expression representing x with r | 7.6r²-23.0r+33.0 | | | 3.8r²-9.3r+10.2 | | | 0.0 | | |
| a=R32 | 7.0 | | | 14.4 | | | 17.3 | | |
| Quadratic coefficient | 7.6 | | | 3.8 | | | 0.0 | | |
| Linear coefficient | -23.0 | | | -9.3 | | | 0.0 | | |
| Zero coefficient | 33.0 | | | 10.2 | | | 0.0 | | |
| x approximate expression represented by r and a | (-0.0774a²+1.142a+3.3965)r²+(0.1316a²-0.965a-22.694)r+(-0.0423a²-2.1749a+50.299) | | | | | | | | |
| y approximate expression represented by r and a | (0.0774a²-1.142a-3.3965)r²-(0.1316a²-0.965a-22.694)r+(0.0423a²+1.1749a+49.701) | | | | | | | | |
| z approximate expression represented by r and a | 0.0 | | | | | | | | |

**Table 6**

| Sᵣ approximate expression | | | | | | | | | | |
|---|---|---|---|---|---|---|---|---|---|---|
| r=HFO-1123/ (HFO-1123+HFO-1132E) | | 0.0 | 0.5 | 1.0 | 0.0 | 0.5 | 1.0 | 0.0 | 0.5 | 1.0 |
| x-(HFO-1132 (E) + HFO-1123) | | 48.3 | 40.0 | 35.0 | 40.8 | 33.6 | 29.0 | 32.5 | 26.6 | 22.8 |
| y=CF3I | | 26.0 | 32.1 | 36.5 | 28.8 | 34.3 | 38.4 | 32.0 | 36.6 | 40.0 |
| z=R1234yf | | 25.7 | 27.9 | 28.5 | 27.1 | 28.8 | 29.3 | 28.5 | 29.8 | 30.2 |
| Approximate expression representing x with r | | 6.6r²-19.9r+48.3 | | | 5.2r²-17.0r+40.8 | | | 4.2r²-13.9r+32.5 | | |
| Approximate expression representing y with r | | -3.4r²+13.9r+26.0 | | | - 2.8r²+12.4r+28.8 | | | -2.4r²+10.4r+32.0 | | |
| Approximate expression representing z with r | | -3.2r²+6.0r+25.7 | | | -2.4r²+4.6r+27.1 | | | -1.8r²+3.5r+28.5 | | |
| x | a=R32 | 0.0 | | | 3.3 | | | 7.0 | | |
| | Quadratic coefficient | 6.6 | | | 5.2 | | | 4.2 | | |
| | Linear coefficient | -19.9 | | | -17.0 | | | -13.9 | | |
| | Zero coefficient | 48.3 | | | 40.8 | | | 32.5 | | |
| y | a=R32 | 0.0 | | | 3.3 | | | 7.0 | | |
| | Quadratic coefficient | -3.4 | | | -2.8 | | | -2.4 | | |
| | Linear coefficient | 13.9 | | | 12.4 | | | 10.4 | | |
| | Zero coefficient | 26.0 | | | 28.8 | | | 32.0 | | |
| z | a=R32 | 0.0 | | | 3.3 | | | 7.0 | | |
| | Quadratic coefficient | -3.2 | | | -2.4 | | | -1.8 | | |
| | Linear coefficient | 6.0 | | | 4.6 | | | 3.5 | | |
| | Zero coefficient | 25.7 | | | 27.1 | | | 28.5 | | |
| x approximate expression represented by r and a | | (0.022a²-0.4968a+6.6)r²+(-0.0059a²+0.8981a-19.9)r+(0.0042a²-2.2866a+48.3) | | | | | | | | |
| y approximate expression represented by r and a | | (-0.0105a²+0.2166a-3.4)r²+(-0.0123a²-0.414a+13.9)r+(0.0023a²+0.8408a+26.0) | | | | | | | | |
| z approximate expression represented by r and a | | (-0.0115a²+0.2803a-3.2)r²+(0.0181a²-0.4841a+6.0)r+(-0.0066a²+0.4459a+25.7) | | | | | | | | |

| Sᵣ approximate expression | | | | | | | | | | |
|---|---|---|---|---|---|---|---|---|---|---|
| r=HFO-1123/ (HFO-1123+HFO-1132E) | | 0.0 | 0.5 | 1.0 | 0.0 | 0.5 | 1.0 | 0.0 | 0.5 | 1.0 |
| x=(HFO-1132 (E) + H FO-1123) | | 33.0 | 26.6 | 22.8 | 16.4 | 13.4 | 11.4 | 10.3 | 8.4 | 7.2 |
| y=CF3I | | 32.0 | 36.6 | 40.0 | 38.6 | 41.0 | 42.8 | 41.1 | 42.7 | 43.7 |
| z=R1234yf | | 28.5 | 29.8 | 30.2 | 30.6 | 31.2 | 31.4 | 31.3 | 31.6 | 31.8 |
| Approximate expression representing x with r | | 5.2r²-15.4r+33.0 | | | 2.0r²-7.0r+16.4 | | | 1.4r²-4.5r+10.3 | | |
| Approximate expression representing y with r | | -2.4r²+10.4r+32.0 | | | -1.2r²+5.4r+386 | | | -1.2r²+3.8r+41.1 | | |
| Approximate expression representing z with r | | -1.8r²+3.5r+28.5 | | | -0.8r²+1.6r+30.6 | | | -0.2r²+0.7r+31.3 | | |
| x | a=R32 | 7.0 | | | 14.4 | | | 17.3 | | |
| | Quadratic coefficient | 5.2 | | | 2.0 | | | 1.4 | | |
| | Linear coefficient | -15.4 | | | -7.0 | | | -4.5 | | |
| | Zero coefficient | 33.0 | | | 16.4 | | | 10.3 | | |
| y | a=R32 | 7.0 | | | 14.4 | | | 17.3 | | |
| | Quadratic coefficient | -2.4 | | | -1.2 | | | -1.2 | | |
| | Linear coefficient | 10.4 | | | 5.4 | | | 3.8 | | |
| | Zero coefficient | 32.0 | | | 38.6 | | | 41.1 | | |
| z | a=R32 | 7.0 | | | 14.4 | | | 17.3 | | |
| | Quadratic coefficient | -1.8 | | | -0.8 | | | -0.2 | | |
| | Linear coefficient | 3.5 | | | 1.6 | | | 0.7 | | |
| | Zero coefficient | 28.5 | | | 30.6 | | | 31.3 | | |
| x approximate expression represented by r and a | | (0.0219a²-0.901a+10.434)r²+(-0.0265a²+1.7025a-26.018)r+(0.0136a²-2.5337a+50.071) | | | | | | | | |
| y approximate expression represented by r and a | | (-0.0157a²+0.4991a-5.1221)r²+(0.012a²-0.9332a+16.343)r+(-0.0029a²+0.9539a+25.465) | | | | | | | | |
| z approximate expression represented by r and a | | (0.007a²-0.014a-2.0437)r²+(-0.0052a²-0.1454a+4.7729)r+(-0.0041a²+0.3719a+26.099) | | | | | | | | |

**Table 7**

| Sᵣ approximate expression | | | | | | | | | | |
|---|---|---|---|---|---|---|---|---|---|---|
| r-HFO-1123/ (HFO-1123+HFO-1132E) | | 0.0 | 0.5 | 1.0 | 0.0 | 0.5 | 1.0 | 0.0 | 0.5 | 1.0 |
| x=(HFO-1132 (E) +HFO-1123) | | 10.3 | 8.4 | 7.2 | 7.2 | 6.5 | 6.0 | 2.4 | 2.4 | 2.4 |
| y=CF3I | | 41.1 | 42.7 | 43.7 | 24.0 | 24.6 | 25.0 | 7.2 | 7.2 | 7.2 |
| z=R1234yf | | 31.3 | 31.6 | 31.8 | 47.0 | 47.1 | 47.2 | 61.2 | 61.2 | 61.2 |
| Approximate expression representing x with r | | 1.4r²-4.5r+10.3 | | | 0.4r²-1.6r+7.2 | | | 2.4 | | |
| Approximate expression representing y with r | | -1.2r²+3.8r+41.1 | | | -0.4r²+1.4r+24.0 | | | 7.2 | | |
| Approximate expression representing z with r | | -0.2r²+0.7r+31.3 | | | 0.2r+47.0 | | | 61.2 | | |
| x | a=R32 | 17.3 | | | 21.8 | | | 29.2 | | |
| | Quadratic coefficient | 1.4 | | | 0.4 | | | 0.0 | | |
| | Linear coefficient | -4.5 | | | -1.6 | | | 0.0 | | |
| | Zero coefficient | 10.3 | | | 7.2 | | | 2.4 | | |
| y | a=R32 | 17.3 | | | 21.8 | | | 29.2 | | |
| | Quadratic coefficient | -1.2 | | | -0.4 | | | 0.0 | | |
| | Linear coefficient | 3.8 | | | 1.4 | | | 0.0 | | |
| | Zero coefficient | 41.1 | | | 24.0 | | | 7.2 | | |
| z | a=R32 | 17.3 | | | 21.8 | | | 29.2 | | |
| | Quadratic coefficient | -0.2 | | | 0.0 | | | 0.0 | | |
| | Linear coefficient | 0.7 | | | 0.2 | | | 0.0 | | |
| | Zero coefficient | 31.3 | | | 47.0 | | | 61.2 | | |
| x approximate expression represented by r and a | | (0.0141a²-0.7748a+10.574)r²+(-0.036a²+2.0515a-29.22)r+(0.0034a²-0.8211a+23.493) | | | | | | | | |
| y approximate expression represented by r and a | | (-0.0104a²+0.5843a-8.1967)r²+(0.0289a²-1.6641a+23.933)r+(0.1285a²-8.8263a+155.32) | | | | | | | | |
| z approximate expression represented by r and a | | (-0.0037a²+0.1905a-2.3774)r²+(0.0071a²-0.3874a+5.2871)r+(-0.1319a²+8.6474a-78.814) | | | | | | | | |

**Table 8**

| Bᵣ approximate expression | | | | | | | | | |
|---|---|---|---|---|---|---|---|---|---|
| r-HFO-1123/ (HFO-1123+HFO-1132E) | 0.0 | 0.5 | 1.0 | 0.0 | 0.5 | 1.0 | 0.0 | 0.5 | 1.0 |
| x-(HFO-1132 (E) +HFO-1123) | 48.5 | 44.2 | 43.0 | 42.5 | 39.0 | 38.0 | 36.0 | 33.4 | 32.6 |
| y=CF3I | 0.0 | 0.0 | 0.0 | 0.0 | 0.0 | 0.0 | 0.0 | 0.0 | 0.0 |
| z=R1234yf | 51.5 | 55.8 | 57.0 | 54.2 | 57.7 | 58.7 | 57.0 | 59.6 | 60.4 |
| Approximate expression representing x with r | 6.2r²-11.7r+48.5 | | | 5.0r²-9.5r+42.5 | | | 3.6r²-7.0r+36.0 | | |
| a=R32 | 0.0 | | | 3.3 | | | 7.0 | | |
| Quadratic coefficient | 6.2 | | | 5.0 | | | 3.6 | | |
| Linear coefficient | -11.7 | | | -9.5 | | | -7.0 | | |
| Zero coefficient | 48.5 | | | 42.5 | | | 36.0 | | |
| x approximate expression represented by r and a | (-0.0021a²-0.3567a+6.2)r²+(0.0013a²+0.6624a-11.7)r+(0.0088a²-1.8471a+48.5) | | | | | | | | |
| y approximate expression represented by r and a | 0.0 | | | | | | | | |
| z approximate expression represented by r and a | (0.0021a²+0.3567a-6.2)r²-(0.0013a²+0.6624a-11.7)r+(-0.0088a²+0.8471a+51.5) | | | | | | | | |

| Bᵣ approximate expression | | | | | | | | | |
|---|---|---|---|---|---|---|---|---|---|
| r-HFO-1123/ (HFO-1123+HFO-1132E) | 0.0 | 0.5 | 1.0 | 0.0 | 0.5 | 1.0 | 0.0 | 0.5 | 1.0 |
| x-(HFO-1132 (E) +HFO-1123) | 36.0 | 33.4 | 32.6 | 24.3 | 23.2 | 22.7 | 20.1 | 19.4 | 19.0 |
| y=CF3I | 0.0 | 0.0 | 0.0 | 0.0 | 0.0 | 0.0 | 0.0 | 0.0 | 0.0 |
| z=R1234yf | 57.0 | 59.6 | 60.4 | 61.3 | 62.4 | 62.9 | 62.6 | 63.3 | 63.7 |
| Approximate expression representing x with r | 3.6r²-7.0r+36.0 | | | 1.2r²-2.8r+24.3 | | | 0.6r²-1.7r+20.1 | | |
| a=R32 | 7.0 | | | 14.4 | | | 17.3 | | |
| Quadratic coefficient | 3.6 | | | 1.2 | | | 0.6 | | |
| Linear coefficient | -7.0 | | | -2.8 | | | -1.7 | | |
| Zero coefficient | 36.0 | | | 24.3 | | | 20.1 | | |
| x approximate expression represented by r and a | (0.0114a²-0.5683a+7.0195)r²+(-0.0183a²+0.9587a-12.815)r+(0.0129a²-1.857a+48.367) | | | | | | | | |
| y approximate expression represented by r and a | 0.0 | | | | | | | | |
| z approximate expression represented by r and a | (-0.0114a²+0.5683a-7.0195)r²+(0.0183a²-0.9587a+12.815)r+(-0.0129a²+0.857a+51.633) | | | | | | | | |

| Bᵣ approximate expression | 17.3 | 17.3 | 17.3 | 21.8 | 21.8 | 21.8 | 29.2 | 29.2 | 29.2 |
|---|---|---|---|---|---|---|---|---|---|
| r-HFO-1123/ (HFO-1123+HFO-1132E) | 0.0 | 0.5 | 1.0 | 0.0 | 0.5 | 1.0 | 0.0 | 0.5 | 1.0 |
| x-(HFO-1132 (E) +HFO-1123) | 20.1 | 19.4 | 19.0 | 13.9 | 13.6 | 13.5 | 4.7 | 4.7 | 4.7 |
| y=CF3I | 0.0 | 0.0 | 0.0 | 0.0 | 0.0 | 0.0 | 0.0 | 0.0 | 0.0 |
| z=R1234yf | 62.6 | 63.3 | 63.7 | 64.3 | 64.6 | 64.7 | 66.1 | 66.1 | 66.1 |
| Approximate expression representing x with r | 0.6r²-1.7r+20.1 | | | 0.4r²-0.8r+13.9 | | | 4.7 | | |
| a=R32 | 17.3 | | | 21.8 | | | 29.2 | | |
| Quadratic coefficient | 0.6 | | | 0.4 | | | 0.0 | | |
| Linear coefficient | -1.7 | | | -0.8 | | | 0.0 | | |
| Zero coefficient | 20.1 | | | 13.9 | | | 4.7 | | |
| x approximate expression represented by r and a | (-0.0008a²-0.0129a+1.0643)r²+ (-0.0077a²+0.5019a-8.0723)r+(0.0113a²-1.8198a+48.199) | | | | | | | | |
| y approximate expression represented by r and a | 0.0 | | | | | | | | |
| z approximate expression represented by r and a | (0.0008a²+0.0129a-1.0643)r²+(0.0077a²-0.5019a+8.0723)r+(-0.0113a²+0.8198a+51.801) | | | | | | | | |

**Table 9**

| Cᵣ approximate expression | | | | | | | | | |
|---|---|---|---|---|---|---|---|---|---|
| a=R32 | 0.0 | 0.0 | 0.0 | 7.0 | 7.0 | 7.0 | 17.3 | 17.3 | 17.3 |
| r=HFO-1123/ (HFO-1123+HFO-1132E) | 0.0 | 0.5 | 1.0 | 0.0 | 0.5 | 1.0 | 0.0 | 0.5 | 1.0 |
| x=(HFO-1132 (E) +HFO-1123) | 82.9 | 65.2 | 54.0 | 66.3 | 50.6 | 40.5 | 41.4 | 30.4 | 23.4 |
| y=CF3I | 17.1 | 34.8 | 46.0 | 26.7 | 42.4 | 52.5 | 41.3 | 52.3 | 59.3 |
| z=R1234yf | 0.0 | 0.0 | 0.0 | 0.0 | 0.0 | 0.0 | 0.0 | 0.0 | 0.0 |
| Approximate expression representing x with r | 13.0r²-41.9r+82.9 | | | 11.2r²-37.0r+66.3 | | | 8.0r²-26.0r+41.4 | | |
| a=R32 | 0.0 | | | 7.0 | | | 17.3 | | |
| Quadratic coefficient | 13.0 | | | 11.2 | | | 8.0 | | |
| Linear coefficient | -41.9 | | | -37.0 | | | -26.0 | | |
| Zero coefficient | 82.9 | | | 66.3 | | | 41.4 | | |
| x approximate expression represented by r and a | (-0.0031a²-0.2355a+13.0)r²+(0.0213a²+0.5511a-41.9)r+(-0.0027a²-2.3528a+82.9) | | | | | | | | |
| y approximate expression represented by r and a | (0.0031a²+0.2355a-13.0)r²+(-0.0213a²-0.5511a+41.9)r+(0.0027a²+1.3528a+17.1) | | | | | | | | |
| z approximate expression represented by r and a | 0.0 | | | | | | | | |

| Cᵣ approximate expression | | | | | | | | | |
|---|---|---|---|---|---|---|---|---|---|
| a=R32 | 17.3 | 17.3 | 17.3 | 21.8 | 21.8 | 21.8 | 33.1 | 33.1 | 33.1 |
| r=HFO-1123/ (HFO-1123+HFO-1132E) | 0.0 | 0.5 | 1.0 | 0.0 | 0.5 | 1.0 | 0.0 | 0.5 | 1.0 |
| x=(HFO-1132 (E) +HFO-1123) | 41.4 | 30.4 | 23.4 | 30.3 | 21.8 | 16.6 | 0.0 | 0.0 | 0.0 |
| y=CF3I | 41.3 | 52.3 | 59.3 | 47.9 | 56.4 | 61.6 | 66.9 | 66.9 | 66.9 |
| z=R1234yf | 0.0 | 0.0 | 0.0 | 0.0 | 0.0 | 0.0 | 0.0 | 0.0 | 0.0 |
| Approximate expression representing x with r | 8.0r²-26.0r+41.4 | | | 6.6r²-20.3r+30.3 | | | 0.0 | | |
| a=R32 | 17.3 | | | 21.8 | | | 33.1 | | |
| Quadratic coefficient | 8.0 | | | 6.6 | | | 0.0 | | |
| Linear coefficient | -26.0 | | | -20.3 | | | 0.0 | | |
| Zero coefficient | 41.4 | | | 30.3 | | | 0.0 | | |
| x approximate expression represented by r and a | (-0.01728a²+0.3644a+6.8668)r²+(0.0335a²-0.0444a-35.267)r+(-0.0136a²-1.9352a+78.947) | | | | | | | | |
| y approximate expression represented by r and a | (0.01728a²-0.3644a-6.8668)r²+(-0.0335a²+0.0444a+35.267)r+(0.0136a²+0.9352a+21.053) | | | | | | | | |
| z approximate expression represented by r and a | 0.0 | | | | | | | | |

**Table 10**

| Wᵣ approximate expression | | | | | | | | | | |
|---|---|---|---|---|---|---|---|---|---|---|
| | a=R32 | 0.0 | 0.0 | 0.0 | 7.0 | 7.0 | 7.0 | 17.3 | 17.3 | 17.3 |
| r=HFO-1123/ (HFO-1123+HFO-1132E) | | 0.0 | 0.5 | 1.0 | 0.0 | 0.5 | 1.0 | 0.0 | 0.5 | 1.0 |
| x=(HFO-1132 (E) +HFO-1123) | | 81.5 | 66.4 | 58.4 | 65.8 | 53.2 | 45.7 | 43.5 | 34.6 | 29.5 |
| y=CF3I | | 8.9 | 18.5 | 25.1 | 14.0 | 22.4 | 28.8 | 22.1 | 30.1 | 32.8 |
| z=R1234yf | | 9.6 | 15.1 | 16.5 | 13.2 | 17.4 | 18.5 | 17.1 | 18.0 | 20.4 |
| Approximate expression representing x with r | | 14.2r²-37.3r+81.5 | | | 10.2r²-30.3r+65.8 | | | 7.6r²-21.6r+43.5 | | |
| Approximate expression representing y with r | | -6.0r²+22.2r+8.9 | | | -4.0r²+18.8r+14.0 | | | -10.6r²+21.3r+22.1 | | |
| Approximate expression representing z with r | | -8.2r²+15.1r+9.6 | | | -6.2r²+11.5r+13.2 | | | 3.0r²+0.3r+17.1 | | |
| x | a=R32 | 0.0 | | | 7.0 | | | 17.3 | | |
| | Quadratic coefficient | 14.2 | | | 10.2 | | | 7.6 | | |
| | Linear coefficient | -37.3 | | | -30.3 | | | -21.6 | | |
| | Zero coefficient | 81.5 | | | 65.8 | | | 43.5 | | |
| y | a=R32 | 0.0 | | | 7.0 | | | 17.3 | | |
| | Quadratic coefficient | -6.0 | | | -4.0 | | | -10.6 | | |
| | Linear coefficient | 22.2 | | | 18.8 | | | 21.3 | | |
| | Zero coefficient | 8.9 | | | 14.0 | | | 22.1 | | |
| z | a=R32 | 0.0 | | | 7.0 | | | 17.3 | | |
| | Quadratic coefficient | -8.2 | | | -6.2 | | | 3.0 | | |
| | Linear coefficient | 15.1 | | | 11.5 | | | 0.3 | | |
| | Zero coefficient | 9.6 | | | 13.2 | | | 17.1 | | |
| x approximate expression represented by r and a | | (0.0184a²-0.7005a+14.2)r²+(-0.009a²+1.0629a-37.3)r+(0.0045a²-2.2743a+81.5) | | | | | | | | |
| y approximate expression represented by r and a | | (-0.0536a²+0.6606a-6.0)r²+(0.0421a²-0.7805a+22.2)r+(0.0033a²+0.7052a+8.9) | | | | | | | | |
| z approximate expression represented by r and a | | (0.0351a²+0.0399a-8.2)r²+(-0.0331a²-0.2824a+15.1)r+(-0.0078a²+0.5692a+9.6) | | | | | | | | |

| Wᵣ approximate expression | | | | | | | | | | |
|---|---|---|---|---|---|---|---|---|---|---|
| | a=R32 | 17.3 | 17.3 | 17.3 | 21.8 | 21.8 | 21.8 | 33.1 | 33.1 | 33.1 |
| r=HFO-1123/ (HFO-1123+HFO-1132E) | | 0.0 | 0.5 | 1.0 | 0.0 | 0.5 | 1.0 | 0.0 | 0.5 | 1.0 |
| x=(HFO-1132 (E) +HFO-1123) | | 43.5 | 34.6 | 29.5 | 34.1 | 27.4 | 23.0 | 11.3 | 9.2 | 7.7 |
| y=CF3I | | 22.1 | 30.1 | 32.8 | 25.7 | 30.7 | 34.3 | 34.9 | 36.3 | 37.5 |
| z=R1234yf | | 17.1 | 18.0 | 20.4 | 18.4 | 20.1 | 20.9 | 20.7 | 21.4 | 21.7 |
| Approximate expression representing x with r | | 7.6r²-21.6r+43.5 | | | 4.6r²-15.7r+34.1 | | | 1.2r²-4.8r+11.3 | | |
| Approximate expression representing y with r | | -10.6r²+21.3r+22.1 | | | -2.8r²+11.4r+25.7 | | | -0.4r²+3.0r+34.9 | | |
| Approximate expression representing z with r | | 3.0r²+0.3r+17.1 | | | -1.8r²+4.3r+18.4 | | | -0.8r²+1.8r+20.7 | | |
| x | a=R32 | 17.3 | | | 21.8 | | | 33.1 | | |
| | Quadratic coefficient | 7.6 | | | 4.6 | | | 1.2 | | |
| | Linear coefficient | -21.6 | | | -15.7 | | | -4.8 | | |
| | Zero coefficient | 43.5 | | | 34.1 | | | 11.3 | | |
| y | a=R32 | 17.3 | | | 21.8 | | | 33.1 | | |
| | Quadratic coefficient | -10.6 | | | -2.8 | | | -0.4 | | |
| | Linear coefficient | 21.3 | | | 11.4 | | | 3.0 | | |
| | Zero coefficient | 22.1 | | | 25.7 | | | 34.9 | | |
| z | a=R32 | 17.3 | | | 21.8 | | | 33.1 | | |
| | Quadratic coefficient | 3.0 | | | -1.8 | | | -0.8 | | |
| | Linear coefficient | 0.3 | | | 4.3 | | | 1.8 | | |
| | Zero coefficient | 17.1 | | | 18.4 | | | 20.7 | | |
| x approximate expression represented by r and a | | (0.02317a²-1.5719a+27.864)r²+(-0.0219a²+2.1686a-52.553)r+(0.0045a²-2.2651a+81.337) | | | | | | | | |
| y approximate expression represented by r and a | | (-0.0963a²+5.4972a-76.891)r²+(0.0922a²-5.8047a+94.129)r+(0.0009a²+0.765a+8.598) | | | | | | | | |
| z approximate expression represented by r and a | | (0.07312a²-3.9253a+49.027)r²+(-0.0703a²+3.6361a-41.576)r+(-0.0054a²+0.5001a+10.065) | | | | | | | | |

**Table 11**

| Wᵣ approximate expression | | | | | | | |
|---|---|---|---|---|---|---|---|
| | a=R32 | 33.1 | 33.1 | 33.1 | 33.3 | 33.3 | 33.3 |
| r=HFO-1123/ (HFO-1123+HFO-1132E) | | 0.0 | 0.5 | 1.0 | 0.0 | 0.5 | 1.0 |
| x-(HFO-1132 (E) +HFO-1123) | | 11.3 | 9.2 | 7.7 | 11.4 | 8.0 | 7.8 |
| y=CF3I | | 34.9 | 36.3 | 37.5 | 33.9 | 36.3 | 36.5 |
| z=R1234yf | | 20.7 | 21.4 | 21.7 | 21.4 | 21.4 | 22.4 |
| Approximate expression representing x with r | | 1.2r²-4.8r+11.3 | | | 2.4r²-6.0r+11.4 | | |
| Approximate expression representing y with r | | -0.4r²+3.0r+34.9 | | | -4.4r²+7.0r+33.9 | | |
| Approximate expression representing z with r | | -0.8r²+1.8r+20.7 | | | 2.0r²-1.0r+21.4 | | |
| x | a=R32 | 33.1 | | | 33.3 | | |
| | Quadratic coefficient | 1.2 | | | 2.4 | | |
| | Linear coefficient | -4.8 | | | -6.0 | | |
| | Zero coefficient | 11.3 | | | 11.4 | | |
| y | a=R32 | 33.1 | | | 33.3 | | |
| | Quadratic coefficient | -0.4 | | | -4.4 | | |
| | Linear coefficient | 3.0 | | | 7.0 | | |
| | Zero coefficient | 34.9 | | | 33.9 | | |
| z | a=R32 | 33.1 | | | 33.3 | | |
| | Quadratic coefficient | -0.8 | | | 2.0 | | |
| | Linear coefficient | 1.8 | | | -1.0 | | |
| | Zero coefficient | 20.7 | | | 21.4 | | |
| x approximate expression represented by r and a | | (6.0a-197.4)r²+(-6.0a+193.8)r+(0.5a-5.25) | | | | | |
| y approximate expression represented by r and a | | (-20.0a+661.6)r²+(20.0a-659.0)r+(-5.0a+200.4) | | | | | |
| z approximate expression represented by r and a | | (14.0a-464.2)r²+(-14.0a+465.2)r+(3.5a-95.15) | | | | | |

| Wᵣ approximate expression | | | | | | | | | | |
|---|---|---|---|---|---|---|---|---|---|---|
| | a=R32 | 33.3 | 33.3 | 33.3 | 44.0 | 44.0 | 44.0 | 51.6 | 51.6 | 51.6 |
| r=HFO-1123/ (HFO-1123+HFO-1132E) | | 0.0 | 0.5 | 1.0 | 0.0 | 0.5 | 1.0 | 0.0 | 0.5 | 1.0 |
| x-(HFO-1132 (E) +HFO-1123) | | 11.4 | 9.0 | 7.8 | 6.6 | 6.2 | 6.0 | 2.1 | 2.1 | 2.1 |
| y=CF3I | | 33.9 | 36.3 | 36.5 | 12.5 | 12.7 | 12.9 | 4.5 | 4.5 | 4.5 |
| z=R1234yf | | 21.4 | 21.4 | 22.4 | 36.9 | 37.1 | 37.1 | 41.8 | 41.8 | 41.8 |
| Approximate expression representing x with r | | 2.4r²-6.0r+11.4 | | | 0.4r²-1.0r+6.6 | | | 2.1 | | |
| Approximate expression representing y with r | | 4.4r²+7.0r+33.9 | | | 0.4r+12.5 | | | 4.5 | | |
| Approximate expression representing z with r | | 2.0r²-1.0r+21.4 | | | -0.4r²+0.6r+36.9 | | | 41.8 | | |
| x | a=R32 | 33.3 | | | 44.0 | | | 51.6 | | |
| | Quadratic coefficient | 2.4 | | | 0.4 | | | 0.0 | | |
| | Linear *coefficient* | -6.0 | | | -1.0 | | | 0.0 | | |
| | Zero coefficient | 11.4 | | | 6.6 | | | 2.1 | | |
| y | a=R32 | 33.3 | | | 44.0 | | | 51.6 | | |
| | Quadratic coefficient | -4.4 | | | 0.0 | | | 0.0 | | |
| | Linear coefficient | 7.0 | | | 0.4 | | | 0.0 | | |
| | Zero coefficient | 33.9 | | | 12.5 | | | 4.5 | | |
| z | a=R32 | 33.3 | | | *44.0* | | | 51.6 | | |
| | Quadratic coefficient | 2.0 | | | -0.4 | | | 0.0 | | |
| | Linear coefficient | -1.0 | | | 0.6 | | | 0.0 | | |
| | Zero coefficient | 21.4 | | | 36.9 | | | 41.8 | | |
| x approximate expression represented by r and a | | (0.0073a²-0.7541a+19.376)r²+(-0.0183a²+1.8853a-48.44)r+(-0.00784a²+0.1576a+14.848) | | | | | | | | |
| y approximate expression represented by r and a | | (-0.02246a²+2.1482a-51.018)r²+(0.0308²-3.0a+72.712)r+(0.05178a²-6.0017a+176.35) | | | | | | | | |
| z approximate expression represented by r and a | | (0.01513a²-1.3941a+31.642)r²+(-0.0125a²+1.1146a-24.273)r+(-0.04392a²+4.8441a-91.2) | | | | | | | | |

**Table 12**

| Dᵣ approximate expression | | | | | | | | | |
|---|---|---|---|---|---|---|---|---|---|
| a=R32 | 0.0 | 0.0 | 0.0 | 7.0 | 7.0 | 7.0 | 17.3 | 17.3 | 17.3 |
| r=HFO-1123/ (HFO-1123+HFO-1132E) | 0.0 | 0.5 | 1.0 | 0.0 | 0.5 | 1.0 | 0.0 | 0.5 | 1.0 |
| x=(HFO-1132 (E) +HFO-1123) | 80.8 | 69.8 | 66.9 | 66.6 | 58.6 | 56.0 | 48.4 | 43.8 | 42.0 |
| y=CF3I | 0.0 | 0.0 | 0.0 | 0.0 | 0.0 | 0.0 | 0.0 | 0.0 | 0.0 |
| z=R1234yf | 19.2 | 30.2 | 33.1 | 26.4 | 34.4 | 37.0 | 34.3 | 38.9 | 40.7 |
| Approximate expression representing x with r | 16.2r²-30.1r+80.8 | | | 10.8r²-21.4r+66.6 | | | 5.6r²-12.0r+48.4 | | |
| a=R32 | 0.0 | | | 7.0 | | | 17.3 | | |
| Quadratic coefficient | 16.2 | | | 10.8 | | | 5.6 | | |
| Linear coefficient | -30.1 | | | -21.4 | | | -12.0 | | |
| Zero coefficient | 80.8 | | | 66.6 | | | 48.4 | | |
| x approximate expression represented by r and a | (0.0154a²-0.8793a+16.2)r²+(-0.0191a²+1.3765a-30.1)r+(0.0151a²-2.1344a+80.8) | | | | | | | | |
| y approximate expression represented by r and a | 0.0 | | | | | | | | |
| z approximate expression represented by r and a | (-0.0154a²+0.8793a-16.2)r²+(0.0191a²-1.3765a+30.1)r+(-0.01529a²+1.1344a+19.2) | | | | | | | | |

| Dᵣ approximate expression | | | | | | | | | |
|---|---|---|---|---|---|---|---|---|---|
| a=R32 | 17.3 | 17.3 | 17.3 | 21.8 | 21.8 | 21.8 | 33.1 | 33.1 | 33.1 |
| r=HFO-1123/ (HFO-1123+HFO-1132E) | 0.0 | 0.5 | 1.0 | 0.0 | 0.5 | 1.0 | 0.0 | 0.5 | 1.0 |
| x=(HFO-1132 (E) +HFO-1123) | 48.4 | 43.8 | 42.0 | 41.4 | 38.0 | 36.5 | 25.5 | 24.2 | 23.5 |
| y=CF3I | 0.0 | 0.0 | 0.0 | 0.0 | 0.0 | 0.0 | 0.0 | 0.0 | 0.0 |
| z=R1234yf | 34.3 | 38.9 | 40.7 | 36.8 | 40.2 | 41.7 | 41.4 | 42.7 | 43.4 |
| Approximate expression representing x with r | 5.6r²-12.0r+48.4 | | | 3.8r²-8.7r+41.4 | | | 1.2r²-3.2r+25.5 | | |
| a=R32 | 17.3 | | | 21.8 | | | 33.1 | | |
| Quadratic coefficient | 5.6 | | | 3.8 | | | 1.2 | | |
| Linear coefficient | -12.0 | | | -8.7 | | | -3.2 | | |
| Zero coefficient | 48.4 | | | 41.4 | | | 25.5 | | |
| x approximate expression represented by r and a | (0.01078a²-0.8205a+16.576)r²+(-0.0156a²+1.3436a-30.573)r+(0.0094a²-1.923a+78.855) | | | | | | | | |
| y approximate expression represented by r and a | 0.0 | | | | | | | | |
| z approximate expression represented by r and a | (-0.01078a²+0.8205a-16.576)r²+(0.0156a²-1.3436a+30.573)r+(-0.0094a²+0.923a+21.145) | | | | | | | | |

**Table 13**

| Dᵣ approximate expression | | | | | | |
|---|---|---|---|---|---|---|
| a=R32 | 33.1 | 33.1 | 33.1 | 33.3 | 33.3 | 33.3 |
| r=HFO-1123/ (HFO-1123+HFO-1132E) | 0.0 | 0.5 | 1.0 | 0.0 | 0.5 | 1.0 |
| x=(HFO-1132 (E) +HFO-1123) | 25.5 | 24.2 | 23.5 | 25.2 | 24.0 | 23.3 |
| y=CF3I | 0.0 | 0.0 | 0.0 | 0.0 | 0.0 | 0.0 |
| z=R1234yf | 41.4 | 42.7 | 43.4 | 41.5 | 42.7 | 43.4 |
| Approximate expression representing x with r | 1.2r²-3.2r+25.5 | | | 1.0r²-2.9r+25.2 | | |
| a=R32 | 33.1 | | | 33.3 | | |
| Quadratic coefficient | 1.2 | | | 1.0 | | |
| Linear coefficient | -3.2 | | | -2.9 | | |
| Zero coefficient | 25.5 | | | 25.2 | | |
| x approximate expression represented by r and a | (-a+34.3)r²+(1.5a-52.85)r+(-1.5a+75.15) | | | | | |
| y approximate expression represented by r and a | 0.0 | | | | | |
| z approximate expression represented by r and a | (a-34.3)r²+(-1.5a+52.85)r+(0.5a+24.85) | | | | | |

| Dᵣ approximate expression | | | | | | | | | |
|---|---|---|---|---|---|---|---|---|---|
| a=R32 | 33.3 | 33.3 | 33.3 | 44.0 | 44.0 | 44.0 | 51.6 | 51.6 | 51.6 |
| r=HFO-1123/ (HFO-1123+HFO-1132E) | 0.0 | 0.5 | 1.0 | 0.0 | 0.5 | 1.0 | 0.0 | 0.5 | 1.0 |
| x=(HFO-1132 (E) +HFO-1123) | 25.2 | 24.0 | 23.3 | 12.3 | 12.0 | 11.9 | 4.3 | 4.3 | 4.3 |
| y=CF3I | 0.0 | 0.0 | 0.0 | 0.0 | 0.0 | 0.0 | 0.0 | 0.0 | 0.0 |
| z=R1234yf | 41.5 | 42.7 | 43.4 | 43.7 | 44.0 | 44.1 | 44.1 | 44.1 | 44.1 |
| Approximate expression representing x with r | 1.0r²-2.9r+25.2 | | | 0.4r²-0.8r+12.3 | | | 4.3 | | |
| a=R32 | 33.3 | | | 44.0 | | | 51.6 | | |
| Quadratic coefficient | 1.0 | | | 0.4 | | | 0.0 | | |
| Linear coefficient | -2.9 | | | -0.8 | | | 0.0 | | |
| Zero coefficient | 25.2 | | | 12.3 | | | 4.3 | | |
| x approximate expression represented by r and a | (0.0002a²-0.0706a+3.143)r²+(-0.005a²+0.5806a-16.671)r+(0.00836a²-1.8518a+77.595) | | | | | | | | |
| y approximate expression represented by r and a | 0.0 | | | | | | | | |
| z approximate expression represented by r and a | (-0.0002a²+0.0706a-3.143)r²+(0.005a²-0.5806a+16.671)r+(-0.00836a²+0..8518a+22.405) | | | | | | | | |

The mixed refrigerants further comprising HFO-1123 in addition to HFO-1132(E), CF₃I, R1234yf, and R32 have a refrigerating capacity ratio of 75% or more relative to that of R410A, because they satisfy the following requirements.

### Requirements

When the total mass% of HFO-1123 and HFO-1132(E) is represented by x, the mass% of CF₃I is represented by y, the mass% of R1234yf is represented by z, and the mass% of R32 is represented by a, provided that 0<a≤29.2, based on the sum of HFO-1123, HFO-1132(E), CF₃I, R1234yf, and R32 in the refrigerant, and r = HFO-1123/(HFO-1123+HFO-1132(E)), provided that 0<r<1,
if 0<a≤7.0, coordinates (x,y,z) in a ternary composition diagram having the sum of HFO-1123 and HFO-1132 (E) as a first vertex, CF₃I as a second vertex, and R1234yf as a third vertex are within the range of a figure surrounded by straight lines AᵣSᵣ, SᵣBᵣ, BᵣO, and OA that connect the following 4 points:
   point Aᵣ ((0.0192a²-0.3057a+8.8)r²+ (0.0178a²+0.7898a-29.4)r+(-0.0167a²-2.6115a+52.1), (-0.0192a²+0.3057a-8.8)r²-(0.0178a²+0.7898a-29.4)r+(0.0167a²+1.6115a+47.9), 0.0),
   point Sᵣ ((0.022a²-0.4968a+6.6) r²+ (-0.0059a²+0.8981a-19.9)r+(0.0042a²-2.2866a+48.3)), (-0.0105a²+0.2166a-3.4)r²+(-0.0123a²-0.414a+13.9)r+ (0.0023a²+0.8408a+26.0), (-0.0115a²+0.2803a-3.2)r²+(0.0181a²-0.4841a+6.0)r+(-0.0066a²+0.4459a+25.7)),
   point Bᵣ ((-0.0021a²-0.3567a+6.2)r²+(0.0013a²+0.6624a-11.7)r+(0.0088a²-1.8471a+48.5), 0.0, (0.0021a²+0.3567a-6.2)r²-(0.0013a²+0.6624a-11.7)r+(-0.0088a²+0.8471a+51.5)), and point O (100.0-a, 0.0, 0.0),
   or on the straight lines AᵣSᵣ and SᵣBᵣ (excluding the points Aᵣ and Bᵣ) ;
if 7.0<a≤17.3, coordinates (x,y,z) in the ternary composition diagram are within the range of a figure surrounded by straight lines AᵣSᵣ, SᵣBᵣ, BᵣO, and OA that connect the following 4 points:
   point Aᵣ ((-0.0774a²+1.142a+3.3965)r²+(0.1316a²-0.965a-22.694)r+(-0.0423a²-2.1749a+50.299), (0.0774a²-1.142a-3.3965)r²-(0.1316a²-0.965a-22.694)r+(0.0423a²+1.1749a+49.701), 0.0),
   point Sᵣ ((0.0219a²-0.901a+10.434)r²+(-0.0265a²+1.7025a-26.018)r+(0.0136a²-2.5337a+50.071), (-0.0157a²+0.4991a-5.1221)r²+(0.012a²-0.9332a+16.343)r+(-0.0029a²+0.9539a+25.465), (0.007a²-0.014a-2.0437)r²+(-0.0052a²-0.1454a+4.7729)r+(-0.0041a²+0.3719a+26.099)),
   point Bᵣ ( (0.0114a²-0.5683a+7.0195)r²+(-0.0183a²+0.9587a-12.815)r+(0.0129a²-1.857a+48.367), 0.0, (-0.0114a²+0.5683a-7.0195)r²+(0.0183a²-0.9587a+12.815)r+(-0.0129a²+0.857a+51.633)), and
   point O (100.0-a, 0.0, 0.0),
   or on the straight lines AᵣSᵣ and SᵣBᵣ (excluding the points Aᵣ and Bᵣ); or
if 17.3<a≤29.2, coordinates (x,y,z) in the ternary composition diagram are within the range of a figure surrounded by straight lines PAᵣ, AᵣSᵣ, SᵣBᵣ, BᵣO, and OP that connect the following 5 points:
   point P (0.0, 100.0-a, 0.0),
   point Aᵣ (0.0, 0.2556a²-17.615a+310.95, -0.2556a²+16.615a-210.95),
   point Sᵣ ((0.0141a²-0.7748a+10.574)r²+(-0.036a²+2.0515a-29.22)r+(0.0034a²-0.8211a+23.493), (-0.0104a²+0.5843a-8.1967)r²+(0.0289a²-1.6641a+23.933)r+(0.1285a²-8.8263a+155.32), (-0.0037a²+0.1905a-2.3774)r²+(0.0071a²-0.3874a+5.2871)r+(-0.1319a²+8.6474a-78.814)),
   point Bᵣ ((-0.0008a²-0.0129a+1.0643)r²+(-0.0077a²+0.5019a-8.0723)r+(0.0113a²-1.8198a+48.199), 0.0, (0.0008a²+0.0129a-1.0643)r²+(0.0077a²-0.5019a+8.0723)r+(-0.0113a²+0.8198a+51.801)), and
   point O (100.0-a, 0.0, 0.0),
   or on the straight lines AᵣSᵣ and SᵣBᵣ (excluding the points Aᵣ and Bᵣ).

The mixed refrigerants further comprising HFO-1123 in addition to HFO-1132(E), CF₃I, R1234yf, and R32 have a refrigerating capacity ratio of 90% or more relative to that of R410A, because they satisfy the following requirements.

### Requirements

When the total mass% of HFO-1123 and HFO-1132(E) is represented by x, the mass% of CF₃I is represented by y, the mass% of R1234yf is represented by z, and the mass% of R32 is represented by a, provided that 0<a≤29.2, based on the sum of HFO-1123, HFO-1132(E), CF₃I, R1234yf, and R32 in the refrigerant, and r = HFO-1123/(HFO-1123+HFO-1132(E)), provided that 0<r<1,
if 0<a≤17.3, coordinates (x,y,z) in a ternary composition diagram having the sum of HFO-1123 and HFO-1132(E) as a first vertex, CF₃I as a second vertex, and R1234yf as a third vertex are within the range of a figure surrounded by straight lines CᵣWᵣ, WᵣDᵣ, DᵣO, and OCᵣ that connect the following 4 points:
   point Cᵣ ((-0.0031a²-0.2355a+13.0)r²+(0.0213a²+0.5511a-41.9)r+(-0.0027a²-2.3528a+82.9), (0.0031a²+0.2355a-13.0)r²+(-0.0213a²-0.5511a+41.9)r+(0.0027a2+1.3528a+17.1), 0.0),
   point Wᵣ ((0.0184a²-0.7005a+14.2)r²+(-0.009a²+1.0629a-37.3)r+(0.0045a²-2.2743a+81.5), (-0.0536a²+0.6606a-6.0)r²+(0.0421a²-0.7805a+22.2)r+(0.0033a²+0.7052a+8.9), (0.0351a²+0.0399a-8.2)r²+(-0.0331a²-0.2824a+15.1)r+(-0.0078a²+0.5692a+9.6)),
   point Dᵣ ((0.0154a²-0.8793a+16.2)r²+(-0.0191a²+1.3765a-30.1)r+(0.0151a²-2.1344a+80.8), 0.0. (-0.0154a²+0.8793a-16.2)r²+(0.0191a²-1.3765a+30.1)r+(-0.01529a²+1.1344a+19.2)), and
   point O (100.0-a, 0.0, 0.0),
   or on the straight lines CᵣWᵣ and WᵣDᵣ (excluding the points Cᵣ and Dᵣ) ;
if 17.3<a≤33.1, coordinates (x,y,z) in the ternary composition diagram are within the range of a figure surrounded by straight lines CᵣWᵣ, WᵣDᵣ, DᵣO, and OCᵣ that connect the following 4 points:
   point Cᵣ ((-0.01728a²+0.3644a+6.8668)r²+(0.0335a²-0.0444a-35.267)r+ (-0.0136a²-1.9352a+78.947), (0.01728a²-0.3644a-6.8668)r²+(-0.0335a²+0.0444a+35.267)r+(0.0136a²+0.9352a+21.053), 0.0),
   point Wᵣ ((0.02317a²-1.5719a+27.864)r²+(-0.0219a²+2.1686a-52.553)r+(0.0045a2-2.2651a+81.337), (-0.0963a²+5.4972a-76.891)r²+(0.0922a²-5.8047a+94.129)r+(0.0009a²+0.765a+8.598), (0.07312a²-3.9253a+49.027)r²+(-0.0703a²+3.6361a-41.576)r+(-0.0054a²+0.5001a+10.065)),
   point Dᵣ ((0.01078a²-0.8205a+16.576)r²+(-0.0156a²+1.3436a-30.573)r+(0.0094a²-1.923a+78.855), 0.0. (-0.01078a²+0.8205a-16.576)r²+(0.0156a²-1.3436a+30.573)r+(-0.0094a²+0.923a+21.145)), and
   point O (100.0-a, 0.0, 0.0),
   or on the straight lines CᵣWᵣ and WᵣDᵣ (excluding the points Cᵣ and Dᵣ);
if 33.1<a≤33.3, coordinates (x,y,z) in the ternary composition diagram are within the range of a figure surrounded by straight lines CWᵣ, WᵣDᵣ, DᵣO, OP, and PC that connect the following 5 points:
   point C (0.0, -7.5a+315.15.053, 6.5a-215.15),
   point Wᵣ ((6.0a-197.4)r²+(-6.0a+193.8)r+(0.5a-5.25), (-20.0a+661.6)r²+(20.0a-659.0)r+(-5.0a+200.4), (14.0a-464.2)r²+(-14.0a+465.2)r+(3.5a-95.15)),
   point Dᵣ ((-a+34.3)r²+(1.5a-52.85)r+(-1.5a+75.15), 0.0, (a-34.3)r²+(-1.5a+52.85)r+(0.5a+24.85)),
   point O (100.0-a, 0.0, 0.0), and
   point P (0.0, 100.0, 0.0)),
   or on the straight lines CWᵣ and WᵣDᵣ (excluding the points C and Dᵣ); or
if 33.3<a≤51.6, coordinates (x,y,z) in the ternary composition diagram are within the range of a figure surrounded by straight lines CWᵣ, WᵣDᵣ, DᵣO, OP, and PC that connect the following 5 points:
   point C (0.0, -7.5a+315.15.053, 6.5a-215.15),
   point Wᵣ (0.0073a²-0.7541a+19.376)r²+(-0.0183a²+1.8853a-48.44)r+(-0.00784a²+0.1576a+14.848), (-0.02246a²+2.1482a-51.018)r²+(0.03082-3.0a+72.712)r+(0.05178a²-6.0017a+176.35), (0.01513a²-1.3941a+31.642)r²+(-0.0125a²+1.1146a-24.273)r+(-0.04392a²+4.8441a-91.2)),
   point Dᵣ ((0.0002a²-0.0706a+3.143)r²+(-0.005a²+0.5806a-16.671)r+(0.00836a²-1.8518a+77.595), 0.0, (-0.0002a²+0.0706a-3.143)r²+(0.005a²-0.5806a+16.671)r+(-0.00836a²+0.8518a+22.405)),
   point O (100.0-a, 0.0, 0.0), and
   point P (0.0, 100.0, 0.0)),
   or on the straight lines CWᵣ and WᵣDᵣ (excluding the points C and Dᵣ).

## Claims

1. A composition comprising a refrigerant, the refrigerant comprising trans-1,2-difluoroethylene (HFO-1132(E)), trifluoroiodomethane (CF₃I), 2,3,3,3-tetrafluoro-1-propene (HFO-1234yf), and difluoromethane (R32).

2. The composition of claim 1, wherein, when the mass% of HFO-1132(E), CF₃I, HFO-1234yf, and R32 based on their sum in the refrigerant is respectively represented by x, y, z, and a, provided that 0<a≤29.2, the coordinates (x,y,z) in a ternary composition diagram in which the sum of HFO-1132(E), CF₃I, and HFO-1234yf is (100-a) mass% are within the range of a figure surrounded by:
if 0<a≤7.0:
the straight lines AS, SB, BO, and OA that connect the points A, S, B and O:
A (-0.0167a²-2.6115a+52.1, 0.0167a²+1.6115a+47.9, 0.0),
S (0.0042a²-2.2866a+48.3, 0.0023a²+0.8408a+26.0, -0.0065a²+0.4458a+25.7),
B (0.0088a²-1.8471a+48.5, 0.0, -0.0088a²+0.8471a+51.5),
O (100.0-a, 0.0, 0.0),
or on the straight lines AS and SB (excluding points A and B);
if 7.0<a≤17.3:
the straight lines AS, SB, BO, and OA that connect the points A, S, B and O:
A (-0.0423a²-2.1749a+50.299, 0.0423a²+1.1749a+49.701, 0.0),
S (0.007a²-2.3257a+48.437, -0.0029a²+0.9539a+25.465, -0.0041a²+0.3718a+26.098),
B (0.0129a²-1.857a+48.367, 0.0, -0.0129a²+0.857a+51.633),
O (100.0-a, 0.0, 0.0),
or on the straight lines AS and SB (excluding points A and B); or
if 17.3<a≤29.2:
the straight lines PA, AS, SB, BO, and OP that connect the points P, A, S, B and O:
P (0.0, 100.0-a, 0.0),
A (0.0, 0.2556a²-17.615a+310.95, -0.2556a²+16.615a-210.95),
S (0.0034a²-0.8211a+23.493, 0.1285a²-8.8263a+155.32, -0.1319a²+8.6474a-78.813),
B (0.0113a²-1.8198a+48.199, 0.0, -0.0113a²+0.8198a+51.801),
O (100.0-a, 0.0, 0.0),
or on the straight lines AS and SB (excluding the points A and B).

3. The composition of claim 1, wherein, when the mass% of HFO-1132(E), CF₃I, HFO-1234yf, and R32 based on their sum in the refrigerant is respectively represented by x, y, z, and a, provided that 0<a≤29.2, the coordinates (x,y,z) in a ternary composition diagram in which the sum of HFO-1132(E), CF₃I, and HFO-1234yf is (100-a) mass% are within the range of a figure surrounded by:
if 0<a≤17.3:
the straight lines CW, WD, DO, and OC that connect the points C, W, D and O:
C (-0.0027a²-2.3528a+82.9, 0.0027a²+1.3528a+17.1, 0.0),
W (0.0045a²-2.2743a+81.5, 0.0033a²+0.7052a+8.9, -0.0078a²+0.5692a+9.6),
D (0.0151a2-2.1344a+80.8, 0.0. -0.0151a²+1.1344a+19.2),
O (100.0-a, 0.0, 0.0),
or on the straight lines CW and WD (excluding points C and D);
if 17.3<a≤33.1:
the straight lines CW, WD, DO, and OC that connect the points C, W, D and O:
C (-0.0136a²-1.9352a+78.947, 0.0136a²+0.9352a+21.053, 0.0),
W (0.0045a²-2.2651a+81.337, 0.0009a²+0.765a+8.598, -0.0054a²+0.5001a+10.065),
D (0.0094a²-1.923a+78.855, 0.0. -0.0094a²+0.923a+21.145),
O (100.0-a, 0.0, 0.0),
or on the straight lines CW and WD (excluding points C and D);
if 33.1<a≤33.3:
the straight lines CW, WD, DO, OP, and PC that connect the points C, W, D, O and P:
C (0.0, -7.5a+315.15.053, 6.5a-215.15),
W (0.5a-5.25, -5.0a+200.4, 3.5a-95.15),
D (-1.5a+75.15, 0.0. 0.5a+24.85),
O (100.0-a, 0.0, 0.0),
P (0.0, 100.0, 0.0)),
or on the straight lines CW and WD (excluding points C and D); or
if 33.3<a≤51.6:
the straight lines CW, WD, DO, OP, and PC that connect the points C, W, D, O and P:
C (0.0, 0.0795a²-9.8365a+304.81, -0.0795a²+8.8365a-204.81),
W (-0.00783a²+0.1576a+14.848, 0.05178a²-6.0017a+176.35, -0.04392a²+4.8441a-91.2),
D (0.00837a²-1.8518a+77.595, 0.0. -0.00837a²+0.8518a+22.405),
O (100.0-a, 0.0, 0.0),
P (0.0, 100.0, 0.0)),
or on the straight lines CW and WD (excluding points C and D).

4. The composition of any of claims 1-3, wherein the refrigerant further comprises trifluoroethylene (HFO-1123).

5. The composition of claim 4, wherein when, based on the sum of HFO-1123, HFO-1132(E), CF₃I, HFO-1234yf and R32 in the refrigerant,
x is the total mass% of HFO-1123 and HFO-1132(E),
y is the mass% of CF₃I,
z is the mass% of HFO-1234yf, and
a is the mass% of R32, and 0<a≤29.2, and
$r = HFO - 1123 / \left(HFO-1123+HFO-1132\left(E\right)\right) ,$with 0<r<1, coordinates (x,y,z) in a ternary composition diagram having the sum of HFO-1123 and HFO-1132 (E) as a first vertex, CF₃I as a second vertex, and HFO-1234yf as a third vertex are within the range of a figure surrounded by:
if 0<a≤7.0:
the straight lines AᵣSᵣ, SᵣBᵣ, BᵣO, and OA that connect the points Aᵣ, Sᵣ, Bᵣ and O:
Aᵣ ((0.0192a²-0.3057a+8.8)r²+(0.0178a²+0.7898a-29.4)r+(-0.0167a²-2.6115a+52.1), (-0.0192a²+0.3057a-8.8)r²-(0.0178a²+0.7898a-29.4)r+(0.0167a²+1.6115a+47.9), 0.0),
Sᵣ ((0.022a²-0.4968a+6.6)r²+(-0.0059a²+0.8981a-19. 9)r+(0.0042a²-2.2866a+48.3)), (-0.0105a²+0.2166a-3.4)r²+(-0.0123a²-0.414a+13.9)r+(0.0023a²+0.8408a+26.0), (-0.0115a²+0.2803a-3.2)r²+(0.0181a²-0.4841a+6.0)r+(-0.0066a²+0.4459a+25.7)),
Bᵣ ((-0.0021a²-0.3567a+6.2)r²+(0.0013a²+0.6624a-11.7)r+(0.0088a²-1.8471a+48.5), 0.0, (0.0021a²+0.3567a-6.2) r²-(0.0013a²+0.6624a-11.7)r+(-0.0088a²+0.8471a+51.5)), and
O (100.0-a, 0.0, 0.0),
or on the straight lines AᵣSᵣ and SᵣBᵣ (excluding points Aᵣ and Bᵣ) ;
if 7.0<a≤17.3:
the straight lines AᵣSᵣ, SᵣBᵣ, BᵣO, and OA that connect the points Aᵣ, Sᵣ, Bᵣ and O:
Aᵣ ((-0.0774a²+1.142a+3.3965)r²+(0.1316a²-0.965a-22.694)r+(-0.0423a²-2.1749a+50.299), (0.0774a²-1.142a-3.3965)r²-(0.1316a²-0.965a-22.694)r+(0.0423a²+1.1749a+49.701), 0.0),
Sᵣ ((0.0219a²-0.901a+10.434)r²+(-0.0265a²+1.7025a-26.018)r+(0.0136a²-2.5337a+50.071), (-0.0157a²+0.4991a-5.1221)r²+(0.012a²-0.9332a+16.343)r+(-0.0029a²+0.9539a+25.465), (0.007a²-0.014a-2.0437)r²+(-0.0052a²-0.1454a+4.7729)r+(-0.0041a²+0.3719a+26.099)),
Bᵣ ((0.0114a²-0.5683a+7.0195)r²+(-0.0183a²+0.9587a-12.815)r+(0.0129a²-1.857a+48.367), 0.0, (-0.0114a²+0.5683a-7.0195)r²+(0.0183a²-0.9587a+12.815)r+(-0.0129a²+0.857a+51.633)), and
O (100.0-a, 0.0, 0.0),
or on the straight lines AᵣSᵣ and SᵣBᵣ (excluding the points Aᵣ and Bᵣ); or
if 17.3<a≤29.2:
the straight lines PAᵣ, AᵣSᵣ, SᵣBᵣ, BᵣO, and OP that connect the points P, Aᵣ, Sᵣ, Bᵣ and O:
P (0.0, 100.0-a, 0.0),
Aᵣ (0.0, 0.2556a²-17.615a+310.95, -0.2556a²+16.615a-210.95),
Sᵣ ((0.0141a²-0.7748a+10.574)r²+(-0.036a²+2.0515a-29.22)r+(0.0034a²-0.8211a+23.493), (-0.0104a²+0.5843a-8.1967)r²+(0.0289a²-1.6641a+23.933)r+(0.1285a²-8.8263a+155.32), (-0.0037a²+0.1905a-2.3774)r²+(0.0071a²-0.3874a+5.2871)r+(-0.1319a²+8.6474a-78.814)),
Bᵣ ((-0.0008a²-0.0129a+1.0643)r²+ (-0. 0077a²+0. 5019a-8.0723)r+(0.0113a²-1.8198a+48.199), 0.0, (0.0008a²+0.0129a-1.0643)r²+(0.0077a²-0.5019a+8.0723)r+(-0.0113a²+0.8198a+51.801)), and
O (100.0-a, 0.0, 0.0),
or on the straight lines AᵣSᵣ and SᵣBᵣ (excluding the points Aᵣ and Bᵣ) .

6. The composition of claim 4, wherein when, based on the sum of HFO-1123, HFO-1132(E), CF₃I, HFO-1234yf and R32 in the refrigerant,
x is the total mass% of HFO-1123 and HFO-1132(E),
y is the mass% of CF₃I,
z is the mass% of HFO-1234yf, and
a is the mass% of R32, and 0<a≤29.2, and
$r = HFO - 1123 / \left(HFO-1123+HFO-1132\left(E\right)\right) ,$with 0<r<1, coordinates (x,y,z) in a ternary composition diagram having the sum of HFO-1123 and HFO-1132 (E) as a first vertex, CF₃I as a second vertex, and HFO-1234yf as a third vertex are within the range of a figure surrounded by:
if 0<a≤17.3:
the straight lines CᵣWᵣ, WᵣDᵣ, DᵣO, and OCᵣ that connect the points Cᵣ, Wᵣ, Dᵣ and O:
Cᵣ ((-0.0031a²-0.2355a+13.0)r²+ (0.0213a²+0.5511a-41.9)r+(-0.0027a²-2.3528a+82.9), (0.0031a²+0.2355a-13.0)r²+(-0.0213a²-0.5511a+41.9)r+(0.0027a2+1.3528a+17.1), 0.0),
Wᵣ ((0.0184a²-0.7005a+14.2)r²+(-0.009a²+1.0629a-37.3)r+(0.0045a²-2.2743a+81.5), (-0.0536a²+0.6606a-6.0)r²+(0.0421a²-0.7805a+22.2)r+(0.0033a²+0.7052a+8.9), (0.0351a²+0.0399a-8.2)r²+(-0.0331a²-0.2824a+15.1)r+(-0.0078a²+0.5692a+9.6)),
Dᵣ ((0.0154a²-0.8793a+16.2)r²+(-0.0191a²+1.3765a-30.1)r+(0.0151a²-2.1344a+80.8), 0.0. (-0.0154a²+0.8793a-16.2)r²+(0.0191a²-1.3765a+30.1)r+(-0.01529a²+1.1344a+19.2)), and
O (100.0-a, 0.0, 0.0),
or on the straight lines CᵣWᵣ and WᵣDᵣ (excluding points Cᵣ and Dᵣ) ;
if 17.3<a≤33.1:
the straight lines CᵣWᵣ, WᵣDᵣ, DᵣO, and OCᵣ that connect the points Cᵣ, Wᵣ, Dᵣ and O:
Cᵣ ((-0.01728a²+0.3644a+6.8668)r²+(0.0335a²-0.0444a-35.267)r+(-0.0136a²-1.9352a+78.947), (0.01728a²-0.3644a-6.8668)r²+(-0.0335a²+0.0444a+35.267)r+(0.0136a²+0.9352a+21.053), 0.0),
Wᵣ ((0.02317a²-1.5719a+27.864)r²+(-0.0219a²+2.1686a-52.553)r+(0.0045a2-2.2651a+81.337), (-0.0963a²+5.4972a-76.891)r²+(0.0922a²-5.8047a+94.129)r+(0.0009a²+0.765a+8.598), (0.07312a²-3.9253a+49.027)r²+(-0.0703a²+3.6361a-41.576)r+(-0.0054a²+0.5001a+10.065)),
Dᵣ ((0.01078a²-0.8205a+16.576)r²+(-0.0156a²+1.3436a-30.573)r+(0.0094a²-1.923a+78.855), 0.0. (-0.01078a²+0.8205a-16.576)r²+(0.0156a²-1.3436a+30.573)r+(-0.0094a²+0.923a+21.145)), and
O (100.0-a, 0.0, 0.0),
or on the straight lines CᵣWᵣ and WᵣDᵣ (excluding the points Cᵣ and Dᵣ) ;
if 33.1<a≤33.3:
the straight lines CWᵣ, WᵣDᵣ, DᵣO, OP, and PC that connect the points C, Wᵣ, Dᵣ, O and P:
C (0.0, -7.5a+315.15.053, 6.5a-215.15),
Wᵣ ((6.0a-197.4)r²+(-6.0a+193.8)r+(0.5a-5.25), (-20.0a+661.6)r²+(20.0a-659.0)r+(-5.0a+200.4), (14.0a-464.2)r²+(-14.0a+465.2)r+(3.5a-95.15)),
Dᵣ ((-a+34.3)r²+(1.5a-52.85)r+(-1.5a+75.15), 0.0, (a-34.3)r²+(-1.5a+52.85)r+(0.5a+24.85)),
O (100.0-a, 0.0, 0.0), and
P (0.0, 100.0, 0.0)),
or on the straight lines CWᵣ and WᵣDᵣ (excluding the points C and Dᵣ) ; or
if 33.3<a≤51.6:
the straight lines CWᵣ, WᵣDᵣ, DᵣO, OP, and PC that connect the points C, Wᵣ, Dᵣ, O and P:
C (0.0, -7.5a+315.15.053, 6.5a-215.15),
Wᵣ (0.0073a²-0.7541a+19.376)r²+(-0.0183a²+1.8853a-48.44)r+(-0.00784a²+0.1576a+14.848), (-0.02246a²+2.1482a-51.018)r²+(0.03082-3.0a+72.712)r+(0.05178a²-6.0017a+176.35), (0.01513a²-1.3941a+31.642)r²+(-0.0125a²+1.1146a-24.273)r+(-0.04392a²+4.8441a-91.2)),
Dᵣ ((0.0002a²-0.0706a+3.143)r²+(-0.005a²+0.5806a-16.671)r+(0.00836a²-1.8518a+77.595), 0.0, (-0.0002a²+0.0706a-3.143)r²+(0.005a²-0.5806a+16.671)r+(-0.00836a²+0.8518a+22.405)),
O (100.0-a, 0.0, 0.0), and
P (0.0, 100.0, 0.0)),
or on the straight lines CWᵣ and WᵣDᵣ (excluding the points C and Dᵣ) .

7. The composition of any of claims 1-6, which further comprises a refrigeration oil.

8. The use of the composition of claim 7 as a working fluid for a refrigerating machine.

9. Use of the composition of any of claims 1-7 as an alternative refrigerant for R410A.

10. A refrigerating machine comprising the composition of any of claims 1-7 as a working fluid.

11. A method for operating a refrigerating machine, comprising circulating the composition of any of claims 1-7 as a working fluid in a refrigerating machine.

## Patentansprüche

1. Zusammensetzung, umfassend ein Kältemittel, wobei das Kältemittel trans-1,2-Difluorethylen (HFO-1132(E) ), Trifluoriodmethan (CF₃I), 2,3,3,3-Tetrafluor-1-propen (HFO-1234yf) und Difluormethan (R32) umfasst.

2. Zusammensetzung nach Anspruch 1, wobei, wenn die Masse-% von HFO-1132(E), CF₃I, HFO-1234yf und R32, bezogen ihre Summe im Kältemittel jeweils durch x, y, z bzw. a dargestellt sind, vorausgesetzt, dass 0<a≤29,2, die Koordinaten (x,y,z) in einem ternären Zusammensetzungsdiagramm, in dem die Summe von HFO-1132(E), CF₃I und HFO-1234yf (100-a) Masse-% beträgt, innerhalb des Bereiches einer Figur liegen, die umschlossen wird von:
wenn 0<a≤7,0:
den geraden Linien AS, SB, BO und OA, die die Punkte A, S, B und O verbinden:
A (-0,0167a²-2,6115a+52,1, 0,0167a²+1,6115a+47,9, 0,0),
S (0,0042a²-2,2866a+48,3, 0,0023a²+0,8408a+26,0, -0,0065a²+0,4458a+25,7) ,
B (0,0088a²-1,8471a+48,5, 0,0, -0,0088a²+0,8471a+51,5),
O (100,0-a, 0,0, 0,0),
oder auf den geraden Linien AS und SB (mit Ausnahme der Punkte A und B),
wenn 7,0<a≤17,3:
den geraden Linien AS, SB, BO und OA, die die Punkte A, S, B und O verbinden:
A (-0,0423a²-2,1749a+50,299, 0,0423a²+1,1749a+49,701, 0,0),
S (0,007a²-2,3257a+48,437, -0,0029a²+0,9539a+25,465, -0,0041a²+0,3718a+26,098),
B (0,0129a²-1,857a+48,367, 0,0, -0,0129a²+0,857a+51,633),
O (100,0-a, 0,0, 0,0),
oder auf den geraden Linien AS und SB (mit Ausnahme der Punkte A und B), oder
wenn 17,3<a≤2923:
den geraden Linien PS, AS, SB, BO und OP, die die Punkte P, A, S, B und O verbinden:
P (0,0, 100,0-a, 0,0),
A (0,0, 0,2556a²-17,615a+310,95, -0,2556a²+16,615a-210,95),
S (0,0034a²-0,8211a+23,493, 0,1285a²-8,8263a+155,32, -0,1319a²+8,6474a-78,813),
B (0,0113a²-1,8198a+48,199, 0,0, -0,0113a²+0,8198a+51,801),
O (100,0-a, 0,0, 0,0),
oder auf den geraden Linien AS und SB (mit Ausnahme der Punkte A und B).

3. Zusammensetzung nach Anspruch 1, wobei, wenn die Masse-% von HFO-1132(E), CF₃I, HFO-1234yf und R32, bezogen auf ihre Summe im Kältemittel jeweils durch x, y, z bzw. a dargestellt sind, vorausgesetzt, dass 0<a≤29,2, die Koordinaten (x,y,z) in einem ternären Zusammensetzungsdiagramm, in dem die Summe von HFO-1132(E), CF₃I und HFO-1234yf (100-a) Masse-% beträgt, innerhalb des Bereichs einer Figur liegen, die umschlossen wird von:
wenn 0<a≤17,3:
den geraden Linien CW, WD, DO und OC, die die Punkte C, W, D und O verbinden:
C (-0,0027a²-2,3528a+82,9, 0,0027a²+1,3528a+17,1, 0,0),
W (0,0045a²-2,2743a+81,5, 0,0033a²+0,7052a+8,9, -0,0078a²+0,5692a+9,6),
D (0,0151a²-2,1344a+80,8, 0,0, -0,0151a²+1,1344a+19,2),
O (100,0-a, 0,0, 0,0),
oder auf den geraden Linien CW und WD (mit Ausnahme der Punkte C und D),
wenn 17,3<a≤33,1:
den geraden Linien CW, WD, DO und OC, die die Punkte C, W, D und O verbinden:
C (-0,0136a²-1,9352a+78,947, 0,0136a²+0,9352a+21,053, 0,0),
W (0,0045a²-2,2651a+81,337, 0,0009a²+0,765a+8,598, -0,0054a²+0,5001a+10,065),
D (0,0094a²-1,923a+78,855, 0,0, -0,0094a²+0,923a+21,145),
O (100,0-a, 0,0, 0,0),
oder auf den geraden Linien CW und WD (mit Ausnahme der Punkte C und D),
wenn 33,1<a≤33,3:
den geraden Linien CW, WD, DO, OP und PC, die die Punkte C, W, D, O und P:
C (0,0, -7,5a+315,15,053, 6,5a-215,15),
W (0,5a-5,25, -5,0a+200,4, 3,5a-95,15),
D (-1,5a+75,15, 0,0, 0,5a+24,85),
O (100,0-a, 0,0, 0,0),
P (0,0, 100,0, 0,0)),
oder auf den geraden Linien CW und WD (mit Ausnahme der Punkte C und D) oder
wenn 33,3<a≤51,6:
den geraden Linien CW, WD, DO, OP und PC, die die Punkte C, W, D, O und P verbinden:
C (0,0, 0,0795a²-9,8365a+304,81, -0,0795a²+8,8365a-204,81),
W (-0,00783a²+0,1576a+14,848, 0,05178a²-6,0017a+l76,35, -0,04392a²+4,8441a-91,2),
D (0,00837a²-1,8518a+77,595, 0,0, -0,00837a²+0,8518a+22,405),
O (100,0-a, 0,0, 0,0),
P (0,0, 100,0, 0,0)),
oder auf den geraden Linien CW und WD (mit Ausnahme der Punkte C und D).

4. Zusammensetzung nach einem der Ansprüche 1-3, wobei das Kältemittel ferner Trifluorethylen (HFO-1123) umfasst.

5. Zusammensetzung nach Anspruch 4, wobei, wenn, bezogen auf die Summe von HFO-1123, HFO-1132(E), CF₃I, HFO-1234yf und R32 in dem Kältemittel,
x die Gesamtmasse-% von HFO-1123 und HFO-1132(E) sind,
y die Masse-% von CF₃I sind,
z die Masse-% von HFO-1234yf sind und
a die Masse-% von R32 sind und 0<a≤29,2 und
$r = HFO - 1123 / \left(HFO-1123+HFO-1132\left(E\right)\right) ,$ wobei 0<r<1,
die Koordinaten (x,y,z) in einem ternären Zusammensetzungsdiagramm mit der Summe von HFO-1123 und HFO-1132(E) als einen ersten Eckpunkt, CF₃I als einen zweiten Eckpunkt und HFO-1234yf als einen dritten Eckpunkt innerhalb des Bereichs einer Figur liegen, die umschlossen wird von:
wenn 0<a≤7,0:
den geraden Linien AᵣSᵣ, SᵣBᵣ, BᵣO und OA, die die Punkte Aᵣ, Sᵣ, Bᵣ und O verbinden:
Aᵣ ((0,0192a²-0,3057a+8,8)r²+(0,0178a²+0,7898a-29,4)r+(-0,0167a²-2,6115a+52,1), (-0,0192a²+0,3057a-8,8)r²-(0,0178a²+0,7898a-29,4)r+(0,0167a²+1,6115a+47,9), 0,0),
Sᵣ ((0,022a²-0,4968a+6,6)r²+(-0,0059a²+0,8981a-19,9)r+(0,0042a²-2,2866a+48,3)), (-0,0105a²+0,2166a-3,4)r²+(-0,0123a²-0,414a+13,9)r+(0,0023a²+0,8408a+26,0), (-0,0115a²+0,2803a-3,2)r²+(0,0181a²-0,4841a+6,0)r+(-0,0066a²+0,4459a+25,7)),
Bᵣ ((-0,0021a²-0,3567a+6,2)r²+(0,0013a²+0,6624a-11,7)r+(0,0088a²-1,8471a+48,5), 0,0, (0,0021a²+0,3567a-6,2)r²-(0,0013a²+0,6624a-11,7)r+(-0,0088a²+0,8471a+51,5)),
und
O (100,0-a, 0,0, 0,0),
oder auf den geraden Linien AᵣSᵣ und SᵣBᵣ (mit Ausnahme der Punkte Aᵣ und Bᵣ),
wenn 7,0<a≤17,3:
den geraden Linien AᵣSᵣ, SᵣBᵣ, BᵣO und OA, die die Punkte Aᵣ, Sᵣ, Bᵣ und O verbinden:
Aᵣ ((-0,0774a²+1,142a+3,3965)r²+(0,1316a²-0,965a-22,694)r+(-0,0423a²-2,1749a+50,299), (0,0774a²-1,142a-3,3965)r²-(0,1316a²-0,965a-22,694)r+(0,0423a²+1,1749a+49,701), 0,0),
Sᵣ ((0,0219a²-0,901a+10,434)r²+(-0,0265a²+1,7025a-26,018)r+(0,0136a²-2,5337a+50,071), (-0,0157a²+0,4991a-5,1221)r²+(0,012a²-0,9332a+16,343)r+(-0,0029a²+0,9539a+25,465), (0,007a²-0,014a-2,0437)r²+(-0,0052a²-0,1454a+4,7729)r+(-0,0041a²+0,3719a+26,099)),
Bᵣ ((0,0114a²-0,5683a+7,0195)r²+(-0,0183a²+0,9587a-12,815)r+(0,0129a²-1,857a+48,367), 0,0, (-0,0114a²+0,5683a-7,0195)r²+(0,0183a²-0,9587a+12,815)r+(-0,0129a²+0,857a+51,633)) und
O (100,0-a, 0,0, 0,0),
oder auf den geraden Linien AᵣSᵣ und SᵣBᵣ (mit Ausnahme der Punkte Aᵣ und Bᵣ),
wenn 17,3<a≤29,2:
den geraden Linien PAᵣ, AᵣSᵣ, SᵣBᵣ, BᵣO und OP, die die Punkte P, Aᵣ, Sᵣ, Bᵣ und O verbinden:
P (0,0, 100,0-a, 0,0),
Aᵣ (0,0, 0,2556a²-17,615a+310,95, -0,2556a²+16,615a-210,95),
Sᵣ ((0,0141a²-0,7748a+10,574)r²+(-0,036a²+2,0515a-29,22)r+(0,0034a²-0,8211a+23,493), (-0,0104a²+0,5843a-8,1967)r²+(0,0289a²-1,6641a+23,933)r+(0,1285a²-8,8263a+155,32), (-0,0037a²+0,1905a-2,3774)r²+(0,0071a²-0,3874a+5,2871)r+(-0,1319a²+8,6474a-78,814)),
Bᵣ ((-0,0008a²-0,0129a+l,0643)r²+(-0,0077a²+0,5019a-8,0723)r+(0,0113a²-1,8198a+48,199), 0,0, (0,0008a²+0,0129a-1,0643)r²+(0,0077a²-0,5019a+8,0723)r+(-0,0113a²+0,8198a+51,801)) und
O (100,0-a, 0,0, 0,0),
oder auf den geraden Linien AᵣSᵣ und SᵣBᵣ (mit Ausnahme der Punkte Aᵣ und Bᵣ),

6. Zusammensetzung nach Anspruch 4, wobei, wenn, bezogen auf die Summe von HFO-1123, HFO-1132(E), CF₃I, HFO-1234yf und R32 im Kältemittel,
x die Gesamtmasse-% von HFO-1123 und HFO-1132(E) sind,
y die Masse-% von CF₃I sind,
z die Masse-% von HFO-1234yf sind und
a die Masse-% von R32 sind und 0<a≤29,2 und
$r = HFO - 1123 / \left(HFO-1123+HFO-1132\left(E\right)\right) ,$ wobei 0<r<1
die Koordinaten (x,y,z) in einem ternären Zusammensetzungsdiagramm mit der Summe von HFO-1123 und HFO-1132(E) als einen ersten Eckpunkt, CF₃I als einen zweiten Eckpunkt und HFO-1234yf als einen dritten Eckpunkt innerhalb des Bereichs einer Figur liegen, die umschlossen wird von:
wenn 0<a≤17,3:
den geraden Linien CᵣWᵣ, WᵣDᵣ, DᵣO und OCᵣ, die die Punkte Cᵣ, Wᵣ, Dᵣ und O verbinden:
Cᵣ ((-0,0031a²-0,2355a+13,0)r²+(0,0213a²+0,5511a-41,9)r+(-0,0027a²-2,3528a+82,9), (0,0031a²+0,2355a-13,0)r²+(-0,0213a²-0,5511a+41,9)r+(0,0027a²+1,3528a+17,1), 0,0),
Wᵣ ((0,0184a²-0,7005a+14,2)r²+(-0,009a²+1,0629a-37,3)r+(0,0045a²-2,2743a+81,5), (-0,0536a²+0,6606a-6,0)r²+(0,0421a²-0,7805a+22,2)r+(0,0033a²+0,7052a+8,9), (0,0351a²+0,0399a-8,2)r²+(-0,0331a²-0,2824a+15,l)r+(-0,0078a²+0,5692a+9,6)),
Dᵣ ((0,0154a²-0,8793a+16,2)r²+(-0,0191a²+1,3765a-30,1)r+(0,0151a²-2,1344a+80,8), 0,0, (-0,0154a²+0,8793a-16,2)r²+(0,0191a²-1,3765a+30,l)r+(-0,01529a²+1,1344a+19,2)) und
O (100,0-a, 0,0, 0,0),
oder auf den geraden Linien CᵣWᵣ und WᵣDᵣ, (mit Ausnahme der Punkte Cᵣ und Dᵣ),
wenn 17,3<a≤33,1:
den geraden Linien CᵣWᵣ, WᵣDᵣ, DᵣO und OCᵣ, die die Punkte Cᵣ, Wᵣ, Dᵣ und O verbinden:
Cᵣ ((-0,01728a²+0,3644a+6,8668)r²+(0,0335a²-0,0444a-35,267)r+(-0,0136a²-1,9352a+78,947), (0,01728a²-0,3644a-6,8668)r²+(-0,0335a²+0,0444a+35,267)r+ (0,0136a²+0,9352a+21,053), 0,0),
Wᵣ ((0,02317a²-1,5719a+27,864)r²+(-0,0219a²+2,1686a-52,553)r+(0,0045a²-2,2651a+81, 337), (-0,0963a²+5,4972a-76,891)r²+(0,0922a²-5,8047a+94,129)r+(0,0009a²+0,765a+8,598), (0,07312a²-3,9253a+49,027)r²+(-0,0703a²+3,6361a-41,576)r+(-0,0054a²+0,5001a+10,065)),
Dᵣ ((0,01078a²-0,8205a+16,576)r²+(-0,0156a²+1,3436a-30,573)r+(0,0094a²-1,923a+78,855), 0,0, (-0,01078a²+0,8205a-16,576)r²+(0,0156a²-1,3436a+30,573)r+(-0,0094a²+0,923a+21,145)) und
O (100,0-a, 0,0, 0,0),
oder auf den geraden Linien CᵣWᵣ und WᵣDᵣ, (mit Ausnahme der Punkte Cᵣ und Dᵣ),
wenn 33,1<a≤33,3:
den geraden Linien CWᵣ, WᵣDᵣ, DᵣO, OP und PC, die die Punkte C, Wᵣ, Dᵣ, O und P verbinden:
C (0,0, -7,5a+315,15,053, 6,5a-215,15),
Wᵣ ((6,0a-197,4)r²+(-6,0a+193,8)r+(0,5a-5,25), (-20,0a+661,6)r²+(20,0a-659,0)r+(-5,0a+200,4), (14,0a-464,2)r²+(-14,0a+465,2)r+(3,5a-95,15)),
Dᵣ ((-a+34,3)r²+(1,5a-52,85)r+(-1,5a+75,15), 0,0, (a-34,3)r²+(-1,5a+52,85)r+(0,5a+24,85)),
0 (100,0-a, 0,0, 0,0) und
P (0,0, 100,0, 0,0)),
oder auf den geraden Linien CWᵣ und WᵣDᵣ, (mit Ausnahme der Punkte C und Dᵣ), oder
wenn 33,3<a≤51,6:
den geraden Linien CWᵣ, WᵣDᵣ, DᵣO, OP und PC, die die Punkte C, Wᵣ, Dᵣ, O und P verbinden:
C (0,0, -7,5a+315,15,053, 6,5a-215,15),
Wᵣ (0,0073a²-0,7541a+19,376)r²+(-0,0183a²+1,8853a-48,44)r+(-0,00784a²+0,1576a+14,848), (-0,02246a²+2,1482a-51,018)r²+(0,03082-3,0a+72,712)r+(0,05178a²-6,0017a+176,35), (0,01513a²-1,3941a+31,642)r²+(-0,0125a²+1,1146a-24,273)r+(-0,04392a²+4,8441a-91,2)),
Dᵣ ((0,0002a²-0,0706a+3,143)r²+(-0,005a²+0,5806a-16,671)r+(0,00836a²-1,8518a+77,595), 0,0, (-0,0002a²+0,0706a-3,143)r²+(0,005a²-0,5806a+16,671)r+(-0,00836a²+0,8518a+22,405)),
O (100,0-a, 0,0, 0,0) und
P (0,0, 100,0, 0,0)),
oder auf den geraden Linien CWᵣ und WᵣDᵣ, (mit Ausnahme der Punkte C und Dᵣ),

7. Zusammensetzung nach einem der Ansprüche 1-6, die ferner ein Kältemaschinenöl umfasst.

8. Verwendung der Zusammensetzung nach Anspruch 7 als Arbeitsfluid für eine Kältemaschine.

9. Verwendung der Zusammensetzung nach einem der Ansprüche 1-7 als ein alternatives Kältemittel für R410A.

10. Kältemaschine, umfassend die Zusammensetzung nach einem der Ansprüche 1-7 als Arbeitsfluid.

11. Verfahren zum Betrieb einer Kältemaschine, umfassend das Zirkulieren der Zusammensetzung nach einem der Ansprüche 1-7 als ein Arbeitsfluid in einer Kältemaschine

## Revendications

1. Composition comprenant un fluide frigorigène, le fluide frigorigène comprenant du trans-1,2-difluoroéthylène (HFO-1132 (E)), du trifluoroiodométhane (CF₃I), du 2,3,3,3-tétrafluoro-1-propène (HFO-1234yf) et du difluorométhane (R32),

2. Composition selon la revendication 1, dans laquelle, lorsque les % en masse de HFO- 1132 (E), de CF₃I, de HFO-1234yf et de R32 sur la base de leur somme dans le fluide frigorigène sont respectivement représentés par x, y, z et a, à condition que 0<a≤29,2, les coordonnées (x,y,z) dans un diagramme de composition ternaire dans lequel la somme de HFO-1132 (E), de CF₃I et de HFO-1234yf est de (100-a) % en masse sont dans la plage d'une figure entourée par :
si 0<a≤7,0 :
les droites AS, SB, BO et OA qui relient les points A, S, B et O :
A (-0,0167a²-2,6115a+52,1, 0,0167a²+1,6115a+47,9, 0,0),
S (0,0042a²-2,2866a+48,3, 0,0023a²+0,8408a+26,0, -0,0065a²+0,4458a+25,7),
B (0,0088a²-1,8471a+48,5, 0,0, -0,0088a²+0,8471a+51,5),
O (100,0-a, 0,0, 0,0),
ou sur les droites AS et SB (à l'exclusion des points A et B) ;
si 7,0<a≤17,3 :
les droites AS, SB, BO et OA qui relient les points A, S, B et O :
A (-0,0423a²-2,1749a+50,299, 0,0423a²+1,1749a+49,701, 0,0),
S (0,007a²-2,3257a+48,437, -0,0029a²+0,9539a+25,465,-0,0041a²+0,3718a+26,098),
B (0,0129a²-1,857a+48,367, 0,0, -0,0129a²+0,857a+51,633),
O (100,0-a, 0,0, 0,0),
ou sur les droites AS et SB (à l'exclusion des points A et B) ; ou
si 17,3<a≤29,2 :
les droites PA, AS, SB, BO et OP qui relient les points P, A, S, B et O :
P (0,0, 100,0-a, 0,0),
A (0,0, 0,2556a²-17,615a+310,95, -0,2556a2+16,615a-210,95),
S (0,0034a²-0,8211a+23,493, 0,1285a-8,8263a+155,32,-0,1319a²+8,6474a-78,813),
B (0,0113a²-1,8198a+48,199, 0,0, -0,0113a²+0,8198a+51,801),
O (100,0-a, 0,0, 0,0),
ou sur les droites AS et SB (à l'exclusion des points A et B),

3. Composition selon la revendication 1, dans laquelle, lorsque les % en masse de HFO- 1132 (E), de CF₃I, de HFO-1234yf et de R32 sur la base de leur somme dans le fluide frigorigène sont respectivement représentés par X, y, z et a, à condition que 0<a≤29,2, les coordonnées (x,y,z) dans un diagramme de composition ternaire dans lequel la somme de HFO-1132 (E), de CF₃I et de HFO-1234yf est de (100-a) % en masse sont dans la plage d'une figure entourée par :
si 0<a≤17,3 :
les droites CW, WD, DO et OC qui relient les points C, W, D et O :
C (-0,0027a²-2,3528a+82,9, 0,0027a²+1,3528a+17,1, 0,0),
W (0,0045a²-2,2743a+81,5, 0,0033a²+0,7052a+8,9, -0,0078a²+0,5692a+9,6),
D (0,0151a2-2,1344a+80,8, 0,0. -0,0151a+1,1344a+19,2),
O (100,0-a, 0,0, 0,0),
ou sur les droites CW et WD (à l'exclusion des points C et D) ;
si 17,3<a<33,1 :
les droites CW, WD, DO et OC qui relient les points C, W, D et O :
C (-0,0136a²-1,9352a+78,947, 0,0136a²+0,9352a+21,053, 0,0),
W (0,0045a²-2,2651a+81,337, 0,0009a²+0,765a+8,598, -0,0054a²+0,5001a+10,065),
D (0,0094a²-1,923a+78,855, 0,0, -0,0094a²+0,923a+21,145),
O (100,0-a, 0,0, 0,0),
ou sur les droites CW et WD (à l'exclusion des points C et D) ;
si 33,1<a≤33,3 :
les droites CW, WD, DO, OP et PC qui relient les points C, W, D, O et P :
C (0,0, -7,5a+315,15,053, 6,5a-215,15),
W (0,5a-5,25, -5,0a+200,4, 3,5a-95,15),
D (-1,5a+75,15, 0,0, 0,5a+24,85),
O (100,0-a, 0,0, 0,0),
P (0,0, 100,0, 0,0)),
ou sur les droites CW et WD (à l'exclusion des points C et D) ; ou
si 33,3<a≤51,6 :
les droites CW, WD, DO, OP et PC qui relient les points c, W, D, O et P :
C (0,0, 0,0795a²-9,8365a+304,81, -0,0795a²+8,8365a-204,81),
W (-0,00783a²+0,1576a+14,848, 0,05178a²-6,0017a+176,35, -0,04392a²+4,8441a-91,2),
D (0,00837a²-1,8518a+77,595, 0,0, -0,00837a²+0,8518a+22,405),
O (100,0-a, 0,0, 0,0),
P (0,0, 100,0, 0,0)),
ou sur les droites CW et WD (à l'exclusion des points C et D),

4. Composition selon l'une quelconque des revendications 1 à 3, dans laquelle le fluide frigorigène comprend en outre du trifluoroéthylène (HFO-1123).

5. Composition selon la revendication 4, dans laquelle lorsque, sur la base de la somme de HFO-1123, de HFO-1132 (E), de CF₃I, de HFO-1234yf et de R32 dans le fluide frigorigène,
x est le % en masse total de HFO-1123 et de HFO-1132 (E),
y est le % en masse de CF₃I,
z est le % en masse de HFO-1234yf, et
a est le % en masse de R32, et 0<a≤29,2, et
r = HFO-1123/ ( HFO-1123 + HFO-1132 (E) avec 0<r<1, les coordonnées (x,y,z) dans un diagramme de composition ternaire ayant la somme de HFO-1123 et de HFO-1132 (E) comme premier sommet, CF₃I comme deuxième sommet, et HFO-1234yf comme troisième sommet sont dans la plage d'une figure entourée par :
si 0<a≤7,0 :
les droites ArSr, SrBᵣ, BrO et OA qui relient les points Ar, Sr, Bᵣ et O :
Aᵣ ((0,0192a²-0,3057a+8,8) r²+ (0,0178a²+0,7898a-29,4) r+ (- 0,0167a²-2,6115a+52,1), (-0,0192a²+0,3057a-8,8) r²- (0,0178a²+0,7898a-29,4)r+(0,0167a²+1,6115a+47,9), 0,0),
Sr ((0,022a²-0,4968a+6,6)r²+(-0,0059a²+0,8981a- 19,9) r+ (0,0042a²-2,2866a+48,3)), (-0,0105a²+0,2166a- 3,4) r²+ (-0,0123a²-0,414a+13,9)r+ (0,0023a²+0,8408a+26,0) (-0,0115a²+0,2803a-3,2) r²+(0,0181a²-0,4841a+6,0)r+(- 0,0066a²+0,4459a+25,7))
Bᵣ ((-0,0021a²-0,3567a+6,2) r²+(0,0013a²+0,6624a- 11,7) r+ (0,0088a²-1,8471a+48,5), 0,0, (0,0021a²+0,3567a- 6,2) r²- (0,0013a²+0,6624a-11,7)r- (-0,0088a²+0,8471a+51,5)) et O (100,0-a, 0,0, 0,0),
ou sur les droites AᵣSᵣ et SᵣBᵣ (à l'exclusion des points Aᵣ et Bᵣ) ;
si 7,0<a≤17,3 :
les droites AᵣSᵣ, SᵣBᵣ, BᵣO et OA qui relient les points Aᵣ, Sᵣ, Bᵣ et O :
Aᵣ ((-0,0774a4+1,142a+3,3965) r²+(0,1316a²-0,965a-22,694),r+ (- 0,0423a²-2,1749a+50,299) (0,0774a²-1,142a-3,3965) r²- (0,1316a²-0,965a-22,694) r+ (0,0423a+1,1749a+49,701) , 0,0),
Sr ((0,0219a²-0,901a+10,434)r²+(-0,0265a²+1,7025a- 26,018) r+ (0,0136a²-2,5337a+50,071) (-0,0157a²+0,4991a- 5,1221) r²+ (0,012a²-0,9332a+16,343) r+ (-0,0029a²+0,9539a+25,465), (0,007a²-0,014a-2,0437)r²+ (- 0,0052a²-0,1454a+4,7729)r+(-0,0041a²+0,3719a+26, 099)),
Bᵣ ((0,0114a²-0,5683a+7,0195) r²+(-0,0183a²+0,9587a- 12,815) r+ (0,0129a²-1,857a+48,367) 0,0, (- 0,0114a²+0,5683a-7,0195)r²+(0,0183a2-0,9587a+12,815)t+(-0,0129a²+0,857a+51,633) ), et
O (100,0-a, 0,0, 0,0),
ou sur les droites AᵣSᵣ et SᵣBᵣ (à l'exclusion des points Aᵣ et Bᵣ) ; ou
si 17,3<a≤29,2 :
les droites PAᵣ, AᵣSᵣ, SᵣBᵣ, BᵣO et OP qui relient les points P, Aᵣ, Sᵣ, Bᵣ et O :
P (0,0, 100,0-a, 0,0),
Aᵣ (0,0, 0,2556a²-17,615a+310,95, -0,2556a²+16,615a-210,95),
Sᵣ ((0,0141a²-0,7748a+10,574) r²+(-0,036a²+2,0515a- 29,22) r+ (0,0034a²-0,8211a+23,493), (-0,0104a²+0,5843a- 8,1967) r²+ (0,0289a²-1,6641a+23,933) r+ (0,1285a²- 8,8263a+155,32), (-0,0037a²+0,1905a-2,3774): r²+ (0,0071a²- 0,3874a+5,2871) r+(-0,1319a²+8,6474a-78,814) ) Bᵣ ((-0,0008a²-0,0129a+1,0643) r²+(-0,0077a+0,5019a-8,0723) r+ (0,0113a²-1,8198a+48,199), 0,0,
(0,0008a²+0,0129a-1,0643)r²+(0,0077a²-0,5019a+8,0723)r+(-0,0113a²+0,8198a+51,801)) et
O (100,0-a, 0,0, 0,0),
ou sur les droites AᵣSᵣ et SᵣBᵣ (à l'exclusion des points Aᵣ et Bᵣ).

6. Composition selon la revendication 4, dans laquelle lorsque, sur la base de la somme de HFO-1123, de HFO-1132 (E), de CF₃I, de HFO-1234yf et de R32 dans le fluide frigorigène,
x est le % en masse total de HFO-1123 et de HFO-1132 (E),
y est le % en masse de CF₃I,
z est le % en masse de HFO-1234yf, et
a est le % en masse de R32, et 0<a≤29,2, et$r = HFO - 1123 / \left(HFO-1123+HFO-1132\left(E\right)\right) ,$ avec 0<r<1,
les coordonnées (x,y,z) dans un diagramme de composition ternaire ayant la somme de HFO-1123 et de HFO-1132 (E) comme premier sommet, CF₃I comme deuxième sommet, et HFO-1234yf comme troisième sommet sont dans la plage d'une figure entourée par :
si 0<a≤17,3 :
les droites CᵣWᵣ, WᵣDᵣ, DᵣO et OCᵣ qui relient les points Cr, Wr, Dᵣ et O :
Cᵣ ((-0,0031a²-0,2355a+13,0) r²+(0,0213a²+0,5511a-41,9) r+(- 6 0,0027a²-2,3528a+82,9), (0,0031a²+0,2355a-13,0) : r²+ (- 0,0213a²-0,5511a+41,9) r+ (0,0027a2+1,3528a+17,1), 0,0),
Wr ((0,0184a²-0,7005a+14,2) r+(-0,009a+1,0629a 37,3) r+ (0,0045a²-2,2743a+81,5), (-0,0536a²+0,6606a- 6,0) r²+ (0,0421a²-0,7805a+22,2) r+ (0,0033a²+0,7052a+8,9) (0,0351a²+0,0399a-8,2) r²+(-0,0331a²-0,2824a+15,1)rt(- 0,0078a²+0,5692a+9,6)) Dᵣ ( (0,0154a²-0,8793a+16,2) r²+(-0,0191a²+1,3765a- 30,1) r+ (0,0151a²-2,1344a+80,8), 0,0, (-0,0154a²+0,8793a- 16,2) r²+(0,0191a²-1,3765a+30,1) r+(- 0,01529a+1,1344a+19,2)) et
O (100,0-a, 0,0, 0,0),
ou sur les droites CᵣWᵣ et WᵣDᵣ (à l'exclusion des points Cᵣ et
Dr) ;
si 17,3<a≤33,1 :
les droites CrWr, WrDr, DrO et OCr qui relient les points Cᵣ, Wᵣ, Dᵣ et O :
Cr ((-0,01728a4+0,3644a+6,8668) r²+(0,0335a²-0,0444a- 35,267) r+ (-0,0136a²-1,9352a+78,947), (0,01728a²-0,3644a- 6,8668) r²+ (- 0,0335a²+0,0444a+35,267) r+ (0,0136a²+0,9352a+21,053), 0,0),
Wᵣ ((0,02317a²-1,5719a+27,864) r²+(-0,0219a²+2,1686a- 52,553) r+ (0,0045a2-2,2651a+81,337) (-0,0963a²+5,4972a- 76,891) r²+ (0,0922a²- 5,8047a+94,129) r+ (0,0009a²+0,765a+8,598), (0,07312a²- 3,9253a+49,027)r²+(-0,0703a²+3,6361a-41,576) r+ (- 0,0054a²+0,5001a+10,065) ),
Dr ((0,01078a²-0,8205a+16,576) r²+(-0,0156a²+1,3436a 30,573) r+ (0,0094a-1,923a+78,855), 0,0, (- 0,01078a²+0,8205a-16,576) r²+(0,0156a²-1,3436a+30,573)r+(-0,0094a²+0,923a+21,145) ) et
O (100,0-a, 0,0, 0,0),
ou sur les droites CᵣW₁ et WᵣDᵣ (à l'exclusion des points Cᵣ et Dᵣ) ;
si 33,1<a≤33,3 :
les droites CWr, WrDr, DrO, OP et PC qui relient les points C, Wr, Dr, O et P :
C (0,0, -7,5a+315,15,053, 6,5a-215,15),
Wᵣ ((6,0a-197,4) r²+ (-6,0a+193,8) (0,5a-5,25), (- 20,0a+661,6) r²+ (20,0a-659,0) (-5,0a+200,4), (14,0a- 464,2) r²+ (-14,0a+465,2) r+ (3,5a-95,15) )
Dᵣ ((-a+34,3) r²+ (1,5a-52,85) r+ (-1,5a+75,15), 0,0, (a- 34,3) r²+ (-1,5a+52,85) r+ (0,5a+24,85) )
O (100,0-a, 0,0, 0,0), et
P (0,0, 100,0, 0,0))
ou sur les droites CW₁ et WrDᵣ (à l'exclusion des points C et Dᵣ) ; ou
si 33,3<a≤51,6 :
les droites CWr, WrDr, DrO, OP et PC qui relient les points C, Wr, Dr, O et P :
C (0.0, -7.5a+315.15.053, 6.5a-215.15),
Wᵣ (0.0073a²-0.7541 a+19.376) r²+ (-0.0183a2+1.8853a-48.44 r+ (-0.00784a²+0.1576a+14.848), (-0.02246a²+2.1482a- 51.018) r²+ (0.03082-3.0a+72.712)r+ (0.05178a²- 6.0017a+176.35), 0.01513a²-1.3941 a+31.642) r²+
(- 0,0125a²+1,1146a-24,273)r+(-0,04392a²+4,8441a-91,2))
Dᵣ ((0,0002a²-0,0706a+3,143) r²+(-0,005a²+0,5806a-16,671) r+ (0,00836a²-1,8518a+77,595) 0,0, (- 0,0002a²+0,0706a-3,143) r²+(0,005a²-0,5806a+16,671) r+(-0,00836a²+0,8518a+22,405))
O (100,0-a, 0,0, 0,0), et
P (0,0, 100,0, 0,0))
ou sur les droites CW₁ et WᵣDᵣ (à l'exclusion des points C et Dᵣ),

7. Composition selon l'une quelconque des revendications 1 à 6, qui comprend en outre une huile frigorigène,

8. Utilisation de la composition selon la revendication 7 en tant que fluide de travail pour une machine frigorifique.

9. Utilisation de la composition selon l'une quelconque des revendications 1 à 7 en tant que réfrigérant alternatif au R410A.

10. Machine frigorifique comprenant la composition selon l'une quelconque des revendications 1 à 7 en tant que fluide de travail.

11. Procédé destiné à faire fonctionner une machine frigorifique, comprenant la circulation de la composition selon l'une quelconque des revendications 1 à 7 en tant que fluide de travail dans une machine frigorifique.
